# EUROPEAN PATENT APPLICATION

(11) **EP 4 746 524 A1**
(43) Date of publication of application: **20.05.2026**
(21) Application number: 23944708.9
(22) Date of filing: 12.07.2023
(51) Int. Cl.: H04W 48/08

(54) **INFORMATION TRANSMISSION METHODS AND APPARATUSES, COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN)
(74) Representative: Dehns Germany Partnerschaft mbB
(86) International application number: PCT/CN2023/107092
(87) International publication number: WO 2025/010688

(57) **Abstract**

Provided in the embodiments of the present disclosure are information transmission methods and apparatuses, a communication device, a communication system, and a storage medium. A first network element receives first information sent by a third network element, the first information being used for instructing the first network element to perform network slice admission control on a terminal, wherein the terminal is associated with a service group.

## Description

### TECHNICAL FIELD

The present disclosure relates to the technical field of communication, and in particular, to an information transmission method and apparatus, a communication device, a communication system, and a storage medium.

### BACKGROUND

Mobile media services, cloud Augmented Reality (AR)/Virtual Reality (VR) and other extended Reality (XR) services, cloud gaming, video-based remote control of machines or drones, and other such services are expected to contribute increasingly high traffic to 5G networks. In addition to audio and video streams, XR services also involve multi-modal data streams, such as data streams for bio-haptic perception. These multi-modal data are data inputted from the same device or different devices (including sensors) describing the same service or application, and these data may be outputted to one or more destination device terminals. The various data streams in multi-modal data generally have a certain or even strong correlation, such as the synchronization of audio and video streams, the synchronization of haptic and visual senses, etc. The data streams of such media services themselves, the relationships between the data streams, and the requirements of these service data streams for network transmission all possess some common characteristics. The effective identification and utilization of these characteristics will be more conducive to network and service transmission and control, and also more conducive to service assurance and user experience.

### SUMMARY

With the enhancement of terminal functions, the power consumption of terminals is high, leading to weak endurance.

The embodiments of the present disclosure provide an information transmission method and apparatus, a communication device, and a storage medium.

According to a first aspect of the embodiments of the present disclosure, an information transmission method is provided, where the method is performed by a first network function, and the method includes:
receiving first information sent from a third network function, the first information being used for indicating the first network function to perform network slice admission control for a first terminal, where the first terminal is associated with a service group.

According to a second aspect of the embodiments of the present disclosure, an information transmission method is provided, where the method is performed by a second network function, and the method includes:
receiving second information sent from a first network function, the second information being used for indicating the second network function to perform network slice admission control for a first terminal in a service group, where the first terminal is associated with the service group, where the second information is sent by the first network function based on first information, the first information being used for indicating the first network function to perform the network slice admission control for the first terminal, and the first information being sent by a third network function to the first network function.

According to a third aspect of the embodiments of the present disclosure, an information transmission method is provided, where the method is performed by a third network function, and the method includes:
sending first information to a first network function, the first information being used for indicating the first network function to perform network slice admission control for a first terminal, where the first terminal is associated with a service group.

According to a fourth aspect of the embodiments of the present disclosure, an information transmission method is provided, where the method is performed by a communication system, and the method includes:
sending, by a third network function, first information to a first network function, where the first information is used for indicating the first network function to perform network slice admission control for a first terminal, where the first terminal is associated with a service group.

According to a fifth aspect of the embodiments of the present disclosure, an information transmission apparatus is provided, where the apparatus includes:
a transceiver module, configured to receive first information sent from a third network function, the first information being used for indicating the first network function to perform network slice admission control for a first terminal, where the first terminal is associated with a service group.

According to a sixth aspect of the embodiments of the present disclosure, an information transmission apparatus is provided, where the apparatus includes:
a transceiver module, configured to receive second information sent from a first network function, the second information being used for indicating the second network function to perform network slice admission control for a first terminal in a service group, where the first terminal is associated with a service group, where the second information is sent by the first network function based on first information, the first information being used for indicating the first network function to perform the network slice admission control for the first terminal, and the first information being sent by a third network function to the first network function.

According to a seventh aspect of the embodiments of the present disclosure, an information transmission apparatus is provided, where the apparatus includes:
a transceiver module, configured to send first information to a first network function, the first information being used for indicating the first network function to perform network slice admission control for a first terminal, where the first terminal is associated with a service group.

According to an eighth aspect of the embodiments of the present disclosure, a communication system is provided, including:
a first network function, configured to implement the information transmission method according to the first aspect,
a second network function, configured to implement the information transmission method according to the second aspect, and
a third network function, configured to implement the information transmission method according to the third aspect.

According to a ninth aspect of the embodiments of the present disclosure, a communication device is provided, where the communication device includes:
one or more processors;
where the processor is configured to invoke instructions to enable the communication device to execute the information transmission method according to the first aspect or the second aspect or the third aspect.

According to a tenth aspect of the embodiments of the present disclosure, a storage medium is provided, where the storage medium stores instructions, where when the instructions are run on a communication device, the communication device is enabled to execute the information transmission method according to the first aspect or the second aspect or the third aspect.

During admission control, at least the service group of the first terminal can be taken into account to adjust the admission manner, to improve the consistency of admission control policies for first terminals related to a service group during admission control and enhance the user experience.

It should be understood that the above general description and the following detailed description are merely exemplary and explanatory, and do not limit the embodiments of the present disclosure.

### BRIEF DESCRIPTION OF THE DRAWINGS

The accompanying drawings herein are incorporated into the specification and constitute a part of the specification, show embodiments consistent with the present disclosure, and are used together with the description to explain the principles of the embodiments of the present disclosure.
FIG. 1a is a schematic architectural diagram of a communication system shown according to an exemplary embodiment;
FIG. 1b is a schematic architectural diagram of a communication system shown according to an exemplary embodiment;
FIG. 2a is a schematic flowchart of an information transmission method shown according to an exemplary embodiment;
FIG. 2b is a schematic flowchart of an information transmission method shown according to an exemplary embodiment;
FIG. 2c is a schematic flowchart of an information transmission method shown according to an exemplary embodiment;
FIG. 3a is a schematic flowchart of an information transmission method shown according to an exemplary embodiment;
FIG. 3b is a schematic flowchart of an information transmission method shown according to an exemplary embodiment;
FIG. 3c is a schematic flowchart of an information transmission method shown according to an exemplary embodiment;
FIG. 4a is a schematic flowchart of an information transmission method shown according to an exemplary embodiment;
FIG. 4b is a schematic flowchart of an information transmission method shown according to an exemplary embodiment;
FIG. 5a is a schematic flowchart of an information transmission method shown according to an exemplary embodiment;
FIG. 5b is a schematic flowchart of an information transmission method shown according to an exemplary embodiment;
FIG. 5c is a schematic flowchart of an information transmission method shown according to an exemplary embodiment;
FIG. 6 is a schematic flowchart of an information transmission method shown according to an exemplary embodiment;
FIG. 7a is a schematic flowchart of an information transmission method shown according to an exemplary embodiment;
FIG. 7b is a schematic flowchart of an information transmission method shown according to an exemplary embodiment;
FIG. 7c is a schematic flowchart of an information transmission method shown according to an exemplary embodiment;
FIG. 8a is a schematic structural diagram of an information transmission apparatus shown according to an exemplary embodiment;
FIG. 8b is a schematic structural diagram of an information transmission apparatus shown according to an exemplary embodiment;
FIG. 8c is a schematic structural diagram of an information transmission apparatus shown according to an exemplary embodiment;
FIG. 9a is a schematic structural diagram of a UE shown according to an exemplary embodiment; and
FIG. 9b is a schematic structural diagram of a communication device shown according to an exemplary embodiment.

### DETAILED DESCRIPTION

The embodiments of the present disclosure provide an information transmission method and apparatus, a communication device, and a storage medium.

In a first aspect, embodiments of the present disclosure provide an information transmission method, where the method is performed by a first network function, and the method includes:
receiving first information sent by a third network function, the first information being used for indicating the first network function to perform network slice admission control for a first terminal, where the first terminal is associated with a service group.

In the above embodiments, in admission control, the admission manner can be adjusted by at least taking into account the service group of the terminal, to improve the consistency of the admission control policy for terminals related to the service group during admission control, and improve user experience.

With reference to some embodiments of the first aspect, in some embodiments, the first information further indicates at least one of the following:
de-registering the first terminal from the network slice;
an identifier of the service group associated with the first terminal;
an identifier of the first terminal;
an authorized access type of the network slice;
an identifier of the network slice;
an identifier of the third network function;
an admission control indication, indicating to register the first terminal to the network slice; and
the admission control indication, indicating to de-register the first terminal from the network slice.

In the above embodiments, in admission control, the admission manner can be adjusted by at least taking into account the service group of the terminal, to improve the consistency of the admission control policy for terminals related to the service group during the registration and deregistration procedures, and improve user experience.

With reference to some embodiments of the first aspect, in some embodiments, the method further includes:
performing the network slice admission control for the first terminal based on a comparison result between a first number of second terminals registered with the network slice in the first network function and a first threshold.

In the above embodiments, in admission control, the admission control is performed based on the number of terminals in the network slice, to reduce situations where the network slice capacity is exceeded, improve communication stability, and enhance user experience.

With reference to some embodiments of the first aspect, in some embodiments, the method further includes:
if the first number is less than or equal to the first threshold, registering the first terminal to the network slice; or
if the first number is greater than the first threshold, sending second information to a second network function, where the second information is used for indicating the second network function to perform an admission control associated with the network slice for the first terminal.

In the above embodiments, in admission control, the admission control is performed based on the number of terminals in the network slice to reduce situations where the network slice capacity is exceeded and improve communication stability. In cases where the capacity of the local first network function is exceeded, admission control is requested from a second network function with higher capacity. Through hierarchical admission control, the communication requirements of the terminals are met, and user experience is improved.

With reference to some embodiments of the first aspect, in some embodiments, the method further includes:
if the service group associated with the first terminal is registered with the network slice in the first network function, registering the first terminal to the service group associated with the first terminal; or
if the service group associated with the first terminal is not registered with the network slice in the first network function, and a second number of service groups already registered with the network slice in the first network function is less than or equal to a second threshold, registering the service group associated with the first terminal in the first network function.

With reference to some embodiments of the first aspect, in some embodiments, the second information is used for indicating at least one of the following:
an identifier of the service group associated with the first terminal;
an identifier of the first terminal;
an authorized access type of the network slice;
an identifier of the network slice;
an identifier of the third network function;
an admission control indication, indicating to register the first terminal to the network slice; and
the admission control indication, indicating to de-register the first terminal from the network slice.

In the above embodiments, through the second information, the second network function can determine the service group associated with the terminal, and further perform access control based on the service group, so as to improve the consistency of the admission control policy for terminals related to the service group during admission control and improve user experience.

With reference to some embodiments of the first aspect, in some embodiments, the method further includes:
receiving third information sent by the second network function, where the third information is used for indicating an updated first threshold; and
performing the network slice admission control for the first terminal based on a comparison result between the first number and a third threshold, where the third threshold is an updated value of the first threshold.

In the above embodiments, in cases where the capacity of the local first network function is exceeded, admission control is requested from a second network function with higher capacity. The first threshold is adjusted through the second network function, and through hierarchical admission control, the communication requirements of the terminals are met, and user experience is improved.

With reference to some embodiments of the first aspect, in some embodiments, the method further includes:
receiving fourth information sent by the second network function, where the fourth information is used for indicating whether the second network function allows the first terminal to be registered to the network slice.

In the above embodiments, in cases where the capacity of the local first network function is exceeded, admission control is requested from a second network function with higher capacity. Through hierarchical admission control, the communication requirements of the terminals are met, and user experience is improved.

With reference to some embodiments of the first aspect, in some embodiments,
the first threshold is at least one of the following: a quota number of terminals for the network slice in the first network function, a threshold number of terminals for the network slice in the first network function, and a maximum number of terminals for the network slice in the first network function.

In the above embodiments, whether to allow terminal admission is determined through different types of second thresholds, which improves the flexibility of admission control.

With reference to some embodiments of the first aspect, in some embodiments,
the first number is associated with an access type of the first terminal; and
the first threshold is associated with the access type of the first terminal. In the above embodiments, whether to allow terminal admission is determined through different types of second thresholds, which improves the flexibility of admission control.

With reference to some embodiments of the first aspect, in some embodiments, the method further includes at least one of the following:
removing a number of the first terminal from the first number; and
de-registering the first terminal from the service group associated with the first terminal in the network slice;
where the first information is further used for indicating to de-register the first terminal from the network slice.

In the above embodiments, the number of terminals is updated in real time, which improves the timeliness of information and enhances the accuracy of admission control.

In some embodiments, the method further includes:
deleting an identifier of a service group not registered with a terminal from the first network function.

In the above embodiments, the identifiers of service groups that have no terminals registered are deleted from the first network function, which reduces invalid content within the first network function and improves the operating efficiency of the first network function.

With reference to some embodiments of the first aspect, in some embodiments, the method further includes: sending fifth information to the third network function, where the fifth information is used to indicate at least one of the following:
a result of performing the network slice admission control;
a reason for not being registered to the network slice;
whether a number of second terminals registered with the network slice reaches a maximum value; and
whether a number of service groups registered with the network slice reaches a maximum value.

In the above embodiments, the first network function feeds back the admission control result to the third network function. The third network function can perform subsequent control based on the admission control result, which improves communication reliability.

In the above embodiments, through the first information, the first network function can determine the service group associated with the terminal, and further perform access control based on the service group, so as to improve the consistency of the admission control policy for terminals related to the service group during admission control and improve user experience.

With reference to some embodiments of the first aspect, in some embodiments, the first network function is configured to perform admission control for the network slice within a service area associated with the first network function.

The second network function is configured to perform admission control for the network slice within a service area associated with the second network function, where the service area associated with the second network function includes the service area associated with the first network function.

The third network function is configured to send the first information to the first network function based on an operation request from the first terminal. The operation request may include: a request to register the first terminal, a request to de-register the first terminal, etc.

With reference to some embodiments of the first aspect, in some embodiments, the first network function is a local network slice admission control function (NSACF), the second network function is a primary NSACF, and the third network function is an access and mobility management function (AMF).

In a second aspect, embodiments of the present disclosure provide an information transmission method, where the method is performed by a second network function, and the method includes:
receiving second information sent by a first network function, the second information being used for indicating the second network function to perform network slice admission control for a first terminal in a service group, where the first terminal is associated with the service group, where the second information is sent by the first network function based on first information, the first information being used for indicating the first network function to perform the network slice admission control for the first terminal, and the first information being sent by a third network function to the first network function.

In the above embodiments, in admission control, the admission manner can be adjusted by at least taking into account the service group of the terminal, so as to improve the consistency of the admission control policy for terminals related to the service group during admission control, and improve user experience.

With reference to some embodiments of the second aspect, in some embodiments, the second information is sent when the first network function performs admission control of the network slice for the first terminal and determines that a first number of second terminals already registered in the network slice within the first network function is greater than a first threshold.

In the above embodiments, in admission control, the admission manner can be adjusted by at least taking into account the service group of the terminal, so as to improve the consistency of the admission control policy for terminals related to the service group during admission control, and improve user experience. In cases where the capacity of the local first network function is exceeded, admission control is requested from a second network function with higher capacity. Through hierarchical admission control, the communication requirements of the terminal are met, and user experience is improved.

With reference to some embodiments of the second aspect, in some embodiments, the method further includes:
performing the network slice admission control for the first terminal based on a comparison result between a third number of third terminals registered with the network slice in the first network function and a fourth threshold; or
sending third information to the first network function, where the third information is used for indicating an updated first threshold, where the updated first threshold is used for the first network function to compare with the first threshold to determine whether to allow the first terminal to be registered to the network slice.

In the above embodiments, in admission control, the admission control is performed based on the number of terminals in the network slice, so as to reduce situations where the network slice capacity is exceeded, improve communication stability, and enhance user experience.

In the above embodiments, in cases where the capacity of the local first network function is exceeded, admission control is requested from a second network function with higher capacity. The first threshold is adjusted through the second network function, and through hierarchical admission control, the communication requirements of the terminals are met, and user experience is improved.

With reference to some embodiments of the second aspect, in some embodiments, the method further includes:
if the third number is less than or equal to the fourth threshold, registering the first terminal to the network slice; or
if the third number is greater than the fourth threshold, not allowing the first terminal to be registered to the network slice.

In the above embodiments, in admission control, the admission control is performed based on the number of terminals in the network slice to reduce situations where the network slice capacity is exceeded and improve communication stability.

With reference to some embodiments of the second aspect, in some embodiments, the method further includes:
if the service group associated with the first terminal has been registered with the network slice in the second network function, registering the first terminal to the service group associated with the first terminal; or
if the service group associated with the first terminal has not been registered with the network slice in the second network function, and a fourth number of service groups already registered with the network slice in the second network function is less than or equal to a fifth threshold, registering the service group associated with the first terminal in the second network function.

In the above embodiments, in admission control, the admission manner can be adjusted by at least taking into account the service group of the terminal, so as to improve the consistency of the admission control policy for terminals related to the service group during admission control, and improve user experience.

With reference to some embodiments of the second aspect, in some embodiments, the method further includes:
sending fourth information to the first network function, where the fourth information is used for indicating whether the second network function allows the first terminal to be registered to the network slice.

In the above embodiments, in cases where the capacity of the local first network function is exceeded, admission control is requested from a second network function with higher capacity. Through hierarchical admission control, the communication requirements of the terminals are met, and user experience is improved.

With reference to some embodiments of the second aspect, in some embodiments, the fourth threshold is at least one of the following: a quota number of terminals for the network slice in the second network function, a threshold number of terminals for the network slice in the second network function, and a maximum number of terminals for the network slice in the second network function.

In the above embodiments, whether to allow terminal admission is determined through different types of fourth thresholds, which improves the flexibility of admission control.

With reference to some embodiments of the second aspect, in some embodiments, the first threshold is at least one of the following: a quota number of terminals for the network slice in the first network function, a threshold number of terminals for the network slice in the first network function, and a maximum number of terminals for the network slice in the first network function.

In the above embodiments, whether to allow terminal admission is determined through different types of second thresholds, which improves the flexibility of admission control.

With reference to some embodiments of the second aspect, in some embodiments, the second information is used for indicating at least one of the following:
an identifier of the service group associated with the first terminal;
an identifier of the first terminal;
an authorized access type of the network slice;
an identifier of the network slice;
an identifier of the third network function;
an admission control indication, indicating to register the first terminal to the network slice; and
the admission control indication, indicating to de-register the first terminal from the network slice.

In the above embodiments, through the second information, the second network function can determine the service group associated with the terminal, and further perform access control based on the service group, so as to improve the consistency of the admission control policy for terminals related to the service group during admission control and improve user experience.

In a third aspect, embodiments of the present disclosure provide an information transmission method, where the method is performed by a third network function, and the method includes:
sending first information to a first network function, the first information being used for indicating the first network function to perform network slice admission control for a first terminal, where the first terminal is associated with a service group.

In the above embodiments, in admission control, the admission manner can be adjusted by at least taking into account the service group of the terminal, so as to improve the consistency of the admission control policy for terminals related to the service group during admission control, and improve user experience.

With reference to some embodiments of the third aspect, in some embodiments, the first information further indicates at least one of the following:
de-registering the first terminal from the network slice;
an identifier of the service group associated with the first terminal;
an identifier of the first terminal;
an authorized access type of the network slice;
an identifier of the network slice;
an identifier of the third network function;
an admission control indication, indicating to register the first terminal to the network slice; and
the admission control indication, indicating to de-register the first terminal from the network slice.

In the above embodiments, in admission control, the admission manner can be adjusted by at least taking into account the service group of the terminal, so as to improve the consistency of the admission control policy for terminals related to the service group during the registration and deregistration procedures, and improve user experience.

With reference to some embodiments of the third aspect, in some embodiments, the first network function performing the network slice admission control is performed based on a comparison result between a first number of second terminals registered with the network slice and a first threshold.

In the above embodiments, in admission control, the admission control is performed based on the number of terminals in the network slice, so as to reduce situations where the network slice capacity is exceeded, improve communication stability, and enhance user experience.

With reference to some embodiments of the third aspect, in some embodiments, if the first number is less than or equal to the first threshold, the first network function registers the first terminal to the network slice; or
if the first number is greater than the first threshold, the first network function sends second information to a second network function, where the second information is used for indicating the second network function to perform an admission control associated with the network slice for the first terminal.

In the above embodiments, in admission control, the admission control is performed based on the number of terminals in the network slice to reduce situations where the network slice capacity is exceeded and improve communication stability. In cases where the capacity of the local first network function is exceeded, admission control is requested from a second network function with higher capacity. Through hierarchical admission control, the communication requirements of the terminals are met, and user experience is improved.

With reference to some embodiments of the third aspect, in some embodiments, the second information is used to indicate at least one of the following:
an identifier of the service group associated with the first terminal;
an identifier of the first terminal;
an authorized access type of the network slice;
an identifier of the network slice;
an identifier of the third network function;
an admission control indication, indicating to register the first terminal to the network slice; and
the admission control indication, indicating to de-register the first terminal from the network slice.

In the above embodiments, through the second information, the second network function can determine the service group associated with the terminal, and further perform access control based on the service group, so as to improve the consistency of the admission control policy for terminals related to the service group during admission control and improve user experience.

With reference to some embodiments of the third aspect, in some embodiments, the first network function performing the network slice admission control is determined by the first network function based on a comparison result between a first number of second terminals registered in the first network function and an updated first threshold, where the updated first threshold is indicated by third information that the second network function sends to the first network function based on the second information.

In the above embodiments, in cases where the capacity of the local first network function is exceeded, admission control is requested from a second network function with higher capacity. The first threshold is adjusted through the second network function, and through hierarchical admission control, the communication requirements of the terminals are met, and user experience is improved.

With reference to some embodiments of the third aspect, in some embodiments, the first threshold is at least one of the following: a quota number of terminals for the network slice in the first network function, a threshold number of terminals for the network slice in the first network function, and a maximum number of terminals for the network slice in the first network function.

In the above embodiments, whether to allow terminal admission is determined through different types of second thresholds, which improves the flexibility of admission control.

With reference to some embodiments of the third aspect, in some embodiments, the method further includes:
receiving fifth information sent by the first network function, where the fifth information is used to indicate at least one of the following:
a result of the network slice admission control performed on the first terminal;
a reason for not being registered to the network slice;
whether a number of second terminals registered with the network slice reaches a maximum value; and
whether a number of service groups registered with the network slice reaches a maximum value.

In the above embodiments, the first network function feeds back the admission control result to the third network function. The third network function can perform subsequent control based on the admission control result, which improves communication reliability.

With reference to some embodiments of the third aspect, in some embodiments, the result of performing the network slice admission control for the first terminal is indicated by a second network function to the first network function through fourth information.

An admission control indication, indicating to register the first terminal to the network slice; and
the admission control indication, indicating to de-register the first terminal from the network slice.

In the above embodiments, through the first information, the first network function can determine the service group associated with the terminal, and further perform access control based on the service group, so as to improve the consistency of the admission control policy for terminals related to the service group during admission control and improve user experience.

With reference to some embodiments of the third aspect, in some embodiments, the method further includes: determining a service group to which the first terminal belongs based on at least one of the following:
a local configuration of the third network function;
an operation administration and maintenance (OAM) configuration of the third network function;
unified data management (UDM) subscription information of the first terminal;
a service capability of the first terminal;
service group information corresponding to a permanent equipment identifier (PEI) of the first terminal; and
service group information in a UE context.

In the above embodiments, the third network function determines the service group associated with the terminal, enabling the first network function and/or the second network function to take the terminal's service group into account when performing admission control. This improves the consistency of admission control policies for terminals related to a service group during admission control and enhances the user experience.

In a fourth aspect, embodiments of the present disclosure provide an information transmission method, where the method is performed by a communication system, and the method includes:
sending, by a third network function, first information to a first network function, where the first information is used for indicating the first network function to perform network slice admission control for a first terminal, where the first terminal is associated with a service group.

In a fifth aspect, embodiments of the present disclosure provide an information transmission apparatus, where the apparatus includes:
a transceiver module, configured to receive first information sent by a third network function, the first information being used for indicating the first network function to perform network slice admission control for a first terminal, where the first terminal is associated with a service group.

With reference to some embodiments of the fifth aspect, in some embodiments, the first information further indicates at least one of the following:
de-registering the first terminal from the network slice;
an identifier of the service group associated with the first terminal;
an identifier of the first terminal;
an authorized access type of the network slice;
an identifier of the network slice;
an identifier of the third network function;
an admission control indication, indicating to register the first terminal to the network slice; and
the admission control indication, indicating to de-register the first terminal from the network slice.

With reference to some embodiments of the fifth aspect, in some embodiments, the apparatus further includes:
a processing module, configured to perform the network slice admission control for the first terminal based on a comparison result between a first number of second terminals registered with the network slice in the first network function and a first threshold.

With reference to some embodiments of the fifth aspect, in some embodiments, the processing module is specifically configured to perform one of the following:
if the first number is less than or equal to the first threshold, registering the first terminal to the network slice; and
the first number being greater than the first threshold, sending second information to a second network function, where the second information is used for indicating the second network function to perform the admission control associated with the network slice for the first terminal.

With reference to some embodiments of the fifth aspect, in some embodiments, the processing module is specifically configured as one of the following:
if the service group associated with the first terminal is registered with the network slice in the first network function, registering the first terminal to the service group associated with the first terminal; and
if the service group associated with the first terminal is not registered with the network slice in the first network function, and a second number of service groups already registered with the network slice in the first network function is less than or equal to a second threshold, registering the service group associated with the first terminal in the first network function.

With reference to some embodiments of the fifth aspect, in some embodiments, the second information is used to indicate at least one of the following:
an identifier of the service group associated with the first terminal;
an identifier of the first terminal;
an authorized access type of the network slice;
an identifier of the network slice;
an identifier of the third network function;
an admission control indication, indicating to register the first terminal to the network slice; and
the admission control indication, indicating to de-register the first terminal from the network slice.

With reference to some embodiments of the fifth aspect, in some embodiments, the transceiver module is further configured to receive third information sent by the second network function, where the third information is used to indicate an updated first threshold.

The processing module is further configured to perform the network slice admission control for the first terminal based on a comparison result between the first number and a third threshold, where the third threshold is an updated value of the first threshold.

With reference to some embodiments of the fifth aspect, in some embodiments, the transceiver module is further configured to receive fourth information sent by the second network function, where the fourth information is used to indicate whether the second network function allows the first terminal to register to the network slice.

With reference to some embodiments of the fifth aspect, in some embodiments,

The first threshold is at least one of the following: a quota number of terminals for the network slice in the first network function, a threshold number of terminals for the network slice in the first network function, and a maximum number of terminals for the network slice in the first network function.

With reference to some embodiments of the fifth aspect, in some embodiments,
the first number is associated with an access type of the first terminal; and
the first threshold is associated with the access type of the first terminal.

With reference to some embodiments of the fifth aspect, in some embodiments, the processing module is further configured to perform at least one of the following:
removing a number of the first terminal from the first number; and
de-registering the first terminal from the service group associated with the first terminal in the network slice;
where the first information is further used for indicating to de-register the first terminal from the network slice.

With reference to some embodiments of the fifth aspect, in some embodiments, the apparatus further includes:
deleting an identifier of the service group not registered with a terminal from the first network function.

With reference to some embodiments of the fifth aspect, in some embodiments, the transceiver module is further configured to: send fifth information to the third network function, where the fifth information is used to indicate at least one of the following:
a result of performing the network slice admission control;
a reason for not being registered to the network slice;
whether a number of second terminals registered with the network slice reaches a maximum value; and
whether a number of service groups registered with the network slice reaches a maximum value.

With reference to some embodiments of the fifth aspect, in some embodiments, the first network function is a local NSACF, the second network function is a primary NSACF, and the third network function is an AMF.

In a sixth aspect, embodiments of the present disclosure provide an information transmission apparatus, where the apparatus includes:
a transceiver module, configured to receive second information sent by a first network function, the second information being used for indicating a second network function to perform network slice admission control for a first terminal in a service group, where the first terminal is associated with the service group, where the second information is sent by the first network function based on first information, the first information being used for indicating the first network function to perform the network slice admission control for the first terminal, and the first information being sent by a third network function to the first network function.

With reference to some embodiments of the sixth aspect, in some embodiments, the second information is sent in response to the first network function performing the network slice admission control for the first terminal, and determining that a first number of second terminals registered with the network slice in the first network function is greater than a first threshold.

With reference to some embodiments of the sixth aspect, in some embodiments, the apparatus further includes:
a processing module, configured to perform the network slice admission control for the first terminal based on a comparison result between a third number of third terminals registered with the network slice in the first network function and a fourth threshold; or
the transceiver module, further configured to send third information to the first network function, where the third information is used for indicating an updated first threshold, where the updated first threshold is used for the first network function to compare with the first threshold to determine whether to allow the first terminal to be registered to the network slice.

With reference to some embodiments of the sixth aspect, in some embodiments, the processing module is specifically configured to perform one of the following:
if the third number is less than or equal to the fourth threshold, registering the first terminal to the network slice; and
if the third number is greater than the fourth threshold, not allowing the first terminal to be registered to the network slice.

With reference to some embodiments of the sixth aspect, in some embodiments, the processing module is specifically configured to perform one of the following:
if the service group associated with the first terminal is registered with the network slice in the second network function, registering the first terminal to the service group associated with the first terminal; and
if the service group associated with the first terminal is not registered with the network slice in the second network function, and a fourth number of service groups registered with the network slice in the second network function being less than or equal to a fifth threshold, registering the service group associated with the first terminal in the second network function.

With reference to some embodiments of the sixth aspect, in some embodiments, the transceiver module is further configured to:
send fourth information to the first network function, where the fourth information is used for indicating whether the second network function allows the first terminal to be registered to the network slice.

With reference to some embodiments of the sixth aspect, in some embodiments, the fourth threshold is at least one of the following: a quota number of terminals for the network slice in the second network function, a threshold number of terminals for the network slice in the second network function, and a maximum number of terminals for the network slice in the second network function.

With reference to some embodiments of the sixth aspect, in some embodiments, the first threshold is at least one of the following: a quota number of terminals for the network slice in the first network function, a threshold number of terminals for the network slice in the first network function, and a maximum number of terminals for the network slice in the first network function.

With reference to some embodiments of the sixth aspect, in some embodiments, the second information is used to indicate at least one of the following:
an identifier of the service group associated with the first terminal;
an identifier of the first terminal;
an authorized access type of the network slice;
an identifier of the network slice;
an identifier of the third network function;
an admission control indication, indicating to register the first terminal to the network slice; and
the admission control indication, indicating to de-register the first terminal from the network slice.

In a seventh aspect, embodiments of the present disclosure provide an information transmission apparatus, where the apparatus includes:
a transceiver module, configured to send first information to a first network function, the first information being used for indicating the first network function to perform network slice admission control for a first terminal, where the first terminal is associated with a service group.

With reference to some embodiments of the seventh aspect, in some embodiments, the first information further indicates at least one of the following:
de-registering the first terminal from the network slice;
an identifier of the service group associated with the first terminal;
an identifier of the first terminal;
an authorized access type of the network slice;
an identifier of the network slice;
an identifier of the third network function;
an admission control indication, indicating to register the first terminal to the network slice; and
the admission control indication, indicating to de-register the first terminal from the network slice.

With reference to some embodiments of the seventh aspect, in some embodiments, the first network function performing the network slice admission control is performed based on a comparison result between a first number of second terminals registered with the network slice and a first threshold.

With reference to some embodiments of the seventh aspect, in some embodiments, if the first number is less than or equal to the first threshold, the first network function registers the first terminal to the network slice; or
if the first number is greater than the first threshold, the first network function sends second information to a second network function, where the second information is used for indicating the second network function to perform the admission control associated with the network slice for the first terminal.

With reference to some embodiments of the seventh aspect, in some embodiments, the second information is used to indicate at least one of the following:
an identifier of the service group associated with the first terminal;
an identifier of the first terminal;
an authorized access type of the network slice;
an identifier of the network slice;
an identifier of the third network function;
an admission control indication, indicating to register the first terminal to the network slice; and
the admission control indication, indicating to de-register the first terminal from the network slice.

With reference to some embodiments of the seventh aspect, in some embodiments, the first network function performing the network slice admission control is determined by the first network function based on a comparison result between a first number of second terminals registered in the first network function and an updated first threshold, where the updated first threshold is indicated by third information that the second network function sends to the first network function based on the second information.

With reference to some embodiments of the seventh aspect, in some embodiments, the first threshold is at least one of the following: a quota number of terminals for the network slice in the first network function, a threshold number of terminals for the network slice in the first network function, and a maximum number of terminals for the network slice in the first network function.

With reference to some embodiments of the seventh aspect, in some embodiments, the transceiver module is further configured to receive fifth information sent by the first network function, where the fifth information is used to indicate at least one of the following:
a result of the network slice admission control performed on the first terminal;
a reason for not being registered to the network slice;
whether a number of second terminals registered with the network slice reaches a maximum value; and
whether a number of service groups registered with the network slice reaches a maximum value.

With reference to some embodiments of the seventh aspect, in some embodiments, the result of performing the network slice admission control for the first terminal is indicated by a second network function to the first network function through fourth information.

With reference to some embodiments of the seventh aspect, in some embodiments, the apparatus further includes:
a processing module, configured to determine a service group to which the first terminal belongs based on at least one of the following:
a local configuration of the third network function;
an operation administration and maintenance (OAM) configuration of the third network function;
unified data management (UDM) subscription information of the first terminal;
a service capability of the first terminal;
service group information corresponding to a permanent equipment identifier (PEI) of the first terminal; and
service group information in a UE context.

In an eighth aspect, embodiments of the present disclosure provide a communication system, including:
a first network function, configured to implement the information transmission method described in the first aspect.
a second network function, configured to implement the information transmission method described in the second aspect.
a third network function, configured to implement the information transmission method described in the third aspect.

In a ninth aspect, embodiments of the present disclosure provide a communication device, where the communication device includes:
one or more processors;
where the processor is configured to invoke instructions to enable the communication device to execute the information transmission method described in the first aspect, second aspect, or third aspect.

In a tenth aspect, embodiments of the present disclosure provide a storage medium storing instructions that, when being run on a communication device, enable the communication device to perform the information transmission method described in the first aspect, second aspect, or third aspect.

It can be understood that the aforementioned access network device, terminal, communication devices, communication system, storage medium, program product, and computer program are all configured to execute the methods provided in the embodiments of the present disclosure. Therefore, for the beneficial effects they can achieve, reference may be made to the beneficial effects in the corresponding methods, which will not be repeated here.

The embodiments of the present disclosure provide information transmission methods and apparatuses, a communication device, a communication system, and a storage medium. In some embodiments, the terms "information transmission method", "information processing method" and the like may be used interchangeably; the terms "information transmission apparatus", "information processing apparatus" and the like may be used interchangeably; and the terms "communication system", "information processing system" and the like may be used interchangeably.

The embodiments of the present disclosure are not exhaustive and are merely illustrative of some embodiments, and are not intended to impose specific limitations on the protection scope of the present disclosure. In the absence of contradiction, each step in a certain embodiment may be implemented as an independent embodiment, and the steps may be arbitrarily combined. For example, a solution with some steps removed from a certain embodiment may also be implemented as an independent embodiment, and the order of the steps in a certain embodiment may be arbitrarily exchanged. In addition, the optional implementation manners in a certain embodiment may be arbitrarily combined. In addition, the various embodiments may be arbitrarily combined. For example, some or all steps of different embodiments may be arbitrarily combined, and a certain embodiment may be arbitrarily combined with the optional implementation manners of other embodiments.

In various embodiments of the present disclosure, unless otherwise specified or existing logical contradictions, the terms and/or descriptions between the various embodiments are consistent and can be referred to each other. The technical features in different embodiments can be combined to form new embodiments according to their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "the above-mentioned", "said", "the aforesaid", "this", etc., may mean "one and only one", and may also mean "one or more", "at least one", etc. For example, when articles such as "a", "an" and "the" in English are used in translation, the noun following the article may be understood as a singular expression or a plural expression.

In the embodiments of the present disclosure, "plurality" refers to two or more.

In some embodiments, terms such as "at least one of", "one or more", "a plurality of", and "multiple" may be replaced with one another.

In some embodiments, expressions like "at least one of A and B", "A and/or B", "A in one case and B in another case", and "in response to case A and in response to another case B" may include the following technical solutions depending on the situation: in some embodiments, A (executing A independently of B); in some embodiments, B (executing B independently of A); in some embodiments, execution is selected from A and B (A and B are optionally executed); in some embodiments, A and B (both A and B are executed). The same applies when there are more alternatives such as A, B, and C.

In some embodiments, expressions such as "A or B" may include the following technical solutions depending on the situation: in some embodiments, A (executing A independently of B); in some embodiments, B (executing B independently of A); in some embodiments, execution is selected from A and B (A and B are optionally executed). The same applies when there are more alternatives such as A, B, and C.

In the embodiments of the present disclosure, prefixes such as "first" and "second" are only used to distinguish different described objects, and do not constitute any restriction on the position, order, priority, quantity, content, or other aspects of the described objects. For statements about the described objects, reference shall be made to the descriptions in the context of the claims or the embodiments, and no redundant limitation shall be constituted due to the use of these prefixes. For example, if the described object is a "field", the ordinal numbers before "field" in "first field" and "second field" do not limit the position or order between the "fields"; "first" and "second" do not restrict whether the "fields" they modify are in the same message, nor do they limit the sequence order between the "first field" and the "second field". For another example, if the described object is a "level", the ordinal numbers before the "level" in "first level" and "second level" do not limit the priority between the "levels". For yet another example, the quantity of the described object is not limited by the ordinal number, and may be one or more. Taking the "first apparatus" as an example, the quantity of the "apparatus" therein may be one or more. In addition, objects modified by different prefixes may be the same or different. For instance, if the described object is an "apparatus", the "first apparatus" and the "second apparatus" may be the same apparatus or different apparatuses, and their types may be the same or different; for another example: if the described object is "information", the "first information" and the "second information" may be the same information or different information, and their contents may be the same or different.

In some embodiments, expressions such as "including A", "containing A", "used to indicate A", and "carrying A" can be interpreted as directly carrying A, and can also be interpreted as indirectly indicating A.

In some embodiments, terms such as "...", "determining that...", "in the case of...", "when...", "in the case that...", "if...", and "in the event that..." may be replaced with one another.

In some embodiments, terms such as "greater than", "greater than or equal to", "not less than", "more than", "more than or equal to", "no less than", "higher than", "higher than or equal to", "not lower than", and "above" may be replaced with one another; terms such as "less than", "less than or equal to", "not greater than", "fewer than", "fewer than or equal to", "no more than", "lower than", "lower than or equal to", "not higher than", and "below" may be replaced with one another.

In some embodiments, terms such as "apparatus" may be interpreted as either physical or virtual entities, and their names are not limited to those recorded in the embodiments. Terms including "apparatus", "equipment", "device", "circuit", "network function", "node", "function", "unit", "section", "system", "network", "chip", "chip system", "entity", and "subject" may be replaced with one another.

In some embodiments, "network" may be interpreted as apparatuses included in a network (e.g., access network devices, core network devices, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", and "bandwidth part (BWP)" may be replaced with one another.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" may be replaced with one another.

In some embodiments, an access network device, a core network device, or a network device may be replaced with a terminal. For example, the various embodiments of the present disclosure may also be applied to a structure in which the communication between an access network device, a core network device, or a network device and a terminal is replaced with communication between multiple terminals (for example, this may also be referred to as device-to-device (D2D), vehicle-to-everything (V2X), etc.). In this case, a structure in which the terminal has all or part of the functions of the access network device may also be adopted. In addition, terms such as "uplink" and "downlink" may also be replaced with terms corresponding to inter-terminal communication (for example, "side"). For example, the uplink channel, the downlink channel, etc., may be replaced with a side channel, and the uplink, the downlink, etc., may be replaced with a sidelink.

In some embodiments, a terminal may be replaced with an access network device, a core network device, or a network device. In this case, a structure may also be adopted in which the access network device, the core network device, or the network device has all or part of the functions of a terminal.

In some embodiments, obtaining data, information, etc., may comply with the laws and regulations of the country where it is obtained.

In some embodiments, data, information, etc., may be obtained after acquiring the user's consent.

In addition, each element, each row, or each column in the tables of the embodiments of the present disclosure may be implemented as an independent embodiment, and any combination of any element, any row, or any column may also be implemented as an independent embodiment.

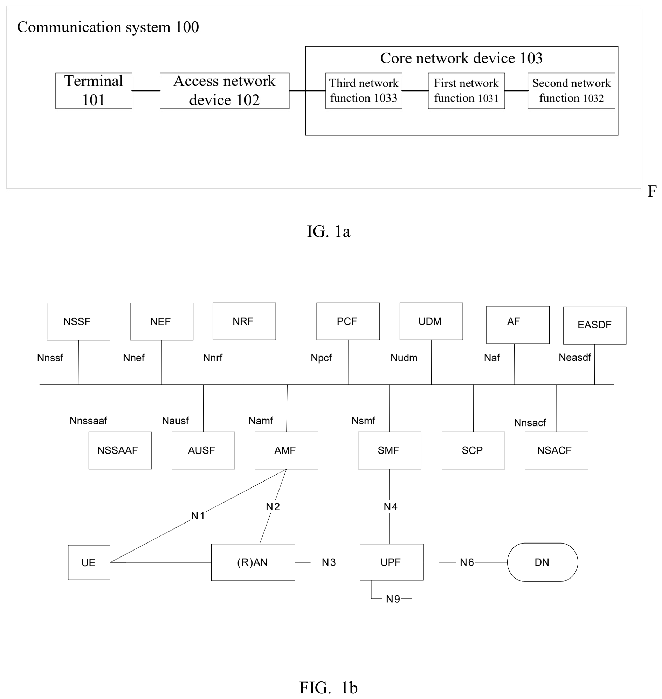

FIG. 1a is a schematic diagram of the architecture of a communication system according to an embodiment of the present disclosure.

As shown in FIG. 1a, the communication system 100 includes a terminal 101 and an access network device 102.

In some embodiments, the terminal 101 includes, for example, at least one of a mobile phone, a wearable device, an Internet of Things (IoT) device, a vehicle with communication functionality, an intelligent vehicle, a tablet computer (Pad), a computer with wireless transceiving functionality, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, an access network device 102 is, for example, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open radio access network (Open RAN), a cloud radio access network (Cloud RAN), a base station in other communication systems, and an access node in a wireless fidelity (WiFi) system, but is not limited thereto.

In some embodiments, the technical solutions of the present disclosure may be applied to the Open RAN architecture. In this case, the interfaces between access network devices or within an access network device involved in the embodiments of the present disclosure may become internal interfaces of the Open RAN, and the procedures and information exchange between these internal interfaces can be implemented through software or programs.

In some embodiments, an access network device may be composed of a central unit (CU) and distributed units (DUs). The CU may also be referred to as a control unit. The adoption of the CU-DU structure may split the protocol layers of the access network device, with functions of some protocol layers being placed in the CU for centralized control, and the functions of the remaining part or all of the protocol layers being distributed in the DUs, which are centrally controlled by the CU, but is not limited thereto.

In some embodiments, the communication system 100 may further include a core network device 103. The core network may include, for example, at least one of an evolved packet core (EPC), a 5G core network (5GCN), and a next generation core (NGC).

The core network equipment 103 includes a first network function 1031, a first network function 1032, and a first network function 1033.

In some embodiments, the first network function includes a local network slice admission control function (NSACF) in the core network device 103.

In some embodiments, the second network function includes: a master network slice admission control function (NSACF) in the core network device 103.

In some embodiments, the third network function may include: an access and mobility management function (AMF) of the core network device 103.

As shown in FIG. 1b, the core network device 103 specifically includes multiple network functions, which may include but are not limited to: (1) an access and mobility management function (AMF): responsible for user access and mobility management; (2) a session management function (SMF): responsible for user session management; (3) a network slice admission control function (NSACF): responsible for performing admission control on network slices; (4) a user plane function (UPF): responsible for user plane processing; (5) an authentication server function (AUSF): responsible for authenticating user access via 3rd generation partnership project (3GPP) and non-3GPP access; (6) a policy control function (PCF): responsible for user policy control, including session policy and mobility policy; (7) a unified data management (UDM): responsible for user subscription data management; (8) a network slice selection function (NSSF): responsible for selecting the network slice to be adopted for user services; (9) NSACF: responsible for admission control of network slice selection, etc. Nnsacf, Nnssf, Nnssaaf, Nausf, Nnef, Namf, Npcf, Nnrf, Nsmf, Nudm, Naf, N1, N2, N3, N4, and N6 are all interface serial numbers. For example, the meaning of each interface in FIG. 1b may refer to the definitions specified in the 3GPP standard protocols, which are not specifically limited in the embodiments of the present disclosure.

It can be understood that the communication system described in the embodiments of the present disclosure is intended to more clearly illustrate the technical solutions of the embodiments of the present disclosure, and does not constitute a limitation on the technical solutions provided by the embodiments of the present disclosure. One of ordinary skills in the art can know that, with the evolution of system architectures and the emergence of new service scenarios, the technical solutions provided by the embodiments of the present disclosure are also applicable to similar technical problems.

The following embodiments of the present disclosure may be applied to the communication system 100 shown in FIG. 1a, or some entities thereof, but are not limited thereto. The various entities shown in FIG. 1a are illustrative only. The communication system may include all or part of the entities in FIG. 1a, and may also include other entities not shown in FIG. 1a. The numbers and forms of various entities are arbitrary. The connection relationships between the entities are illustrative only. The entities may be unconnected or connected, and the connection may be in any manner, which may be a direct connection or an indirect connection, a wired connection or a wireless connection.

Various embodiments of the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G New Radio (NR), Future Radio Access (FRA), New-Radio Access Technology (New-RAT), New Radio (NR), New Radio Access (NX), Future Generation Radio Access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wide Band (UWB), Bluetooth (registered trademark), Public Land Mobile Network (PLMN), Device-to-Device (D2D) systems, Machine-to-Machine (M2M) systems, Internet of Things (IoT) systems, Vehicle-to-Everything (V2X), systems using other communication methods, next-generation systems extended based on these, etc. In addition, multiple systems (for example, a combination of LTE or LTE-A and 5G, etc.) may also be combined for application.

The various data flows of XR multimodal services have strong correlation, and in many scenarios, the data flows of such services are distributed across multiple UEs. The Network Slice Admission Control (NSAC) function adopted in the 5GS system, which performs admission control based on the number of registered UEs in the network, cannot support the multi-UE group admission function required for these XR multimodal services. Consequently, the inconsistency in admission control policies for UEs associated with XR multimodal services results in the network being unable to guarantee the user experience of XR multimodal services, and even failing to ensure the normal provision of such services under specific scenarios.

Network admission control is a single-UE policy, and admission control policies for related UEs of XR multi-modal services are inconsistent, which leads to the network being unable to guarantee the user experience of XR multi-modal services, and even unable to guarantee the normal provision of services in specific scenarios. There is no corresponding admission control policy mechanism to satisfy the above requirements.

How to effectively enhance network slice admission control for UEs related to XRM multi-modal services, and achieve consistent admission control policies for UEs related to XR multi-modal services, is a problem to be solved urgently.

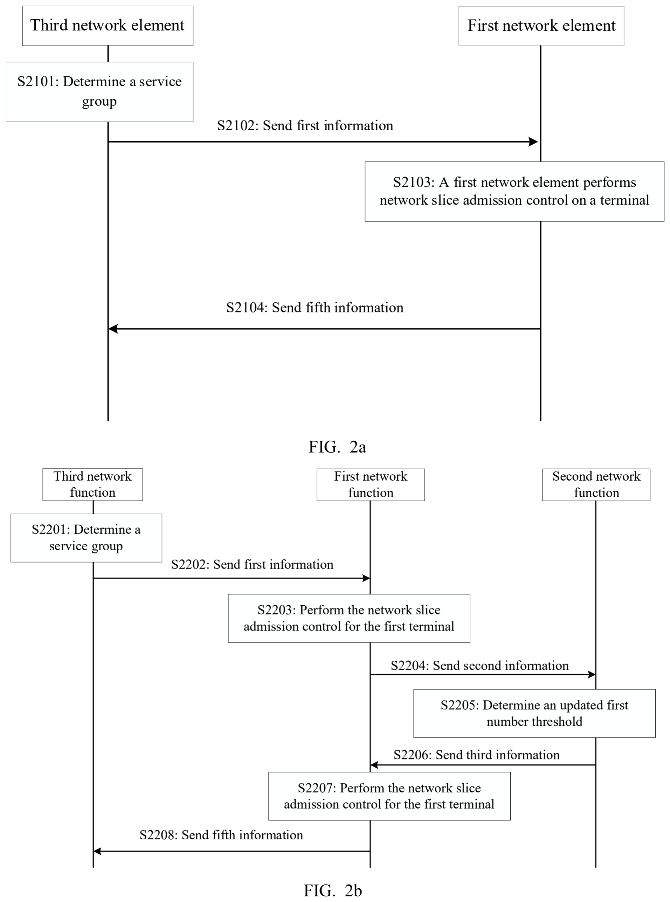

FIG. 2a is an interactive schematic diagram of an information transmission method shown according to an embodiment of the present disclosure. As shown in FIG. 2a, embodiments of the present disclosure relate to an information transmission method used for a communication system 100, the method including the following steps.

In step S2101, a third network function determines a service group.

In some embodiments, the third network function determines the service group of the first terminal.

In some embodiments, the third network function may include: the Access and Mobility Management Function (AMF) in a core network.

In some embodiments, the service group may include an application group corresponding to a service.

In some embodiments, the service group may include: an XR service group.

In some embodiments, the third network function determines the service group, including the third network function determining an identifier of the service group.

In some embodiments, the identifier of the service group includes at least one of the following: an internal group identifier, and a standardized universal group identifier.

In some embodiments, a first terminal in the service group may be associated with the same service.

For example, a first terminal in the service group may be associated with the same XR service.

In some embodiments, the third network function determines a service group to which the first terminal belongs based on one of the following:
a local configuration of the third network function;
an operation administration and maintenance (OAM) configuration of the third network function;
unified data management (UDM) subscription information of the first terminal;
a service capability of the first terminal;
service group information corresponding to a permanent equipment identifier (PEI) of the first terminal; and
service group information in a UE context.

In some embodiments, step S2101 is omitted. The first terminal may send its own service group identifier to the third network function to indicate the service group. Alternatively, the above function is by default or predefined.

In step S2102, the third network function sends first information.

In some embodiments, the third network function sends the first information to the first network function.

In some embodiments, the first network function is configured to perform admission control for the network slice within a service area associated with the first network function.

The second network function is configured to perform admission control for the network slice within a service area associated with the second network function, the service area associated with the second network function contains the service area associated with the first network function; an operation request may include: a request to register the first terminal, a request to deregister the first terminal, etc.

The third network function is configured to send the first information to the first network function based on an operation request of the first terminal. The operation request may include: a request to register the first terminal, a request to deregister the first terminal, etc.

In some embodiments, the admission control includes: Network Slice Admission Control (NSAC).

In some embodiments, the first network function includes: a local network slice admission control function (NSACF) in a core network.

In some embodiments, the second network function includes: a primary Network Slice Admission Control Function (NSACF) in the core network.

In some embodiments, the first information includes, but is not limited to, at least one of the following: a first terminal registration request, a first terminal deregistration request, and an update request of the number of registered second terminals.

In this embodiment, the number has the meaning of quantity, count, or number. For example, the number of second terminals represents the quantity or count of second terminals.

In some embodiments, the first network function is configured to perform admission control on the first terminal in a service area corresponding to the first network function.

In some embodiments, the first network function is associated with at least one service area.

In some embodiments, the second network function is configured to perform global management for more than one first network function.

In some embodiments, the service area associated with the second network function contains the service area associated with the first network function.

In some embodiments, the first information is used to indicate the first network function to perform admission control of the network slice for the first terminal, where the first terminal is associated with a service group.

In some embodiments, the first information may indicate the network slice for which an admission operation is performed through S-NSSAI.

In some embodiments, the first information is triggered by a registration procedure and/or a deregistration procedure for the network slice initiated by the first terminal.

In some embodiments, the first information carries content in registration request information sent by a first terminal, such as an identity of the first terminal, and the like.

In some embodiments, the first terminal may initiate a registration procedure for one or more network slices.

In some embodiments, the first information may indicate that a first network function performs admission control on at least one network slice for the first terminal in a service group.

In some embodiments, the first information may indicate the service group of the first terminal.

In some embodiments, when the AMF does not send an identifier of a service group/a service group, a local NSACF may determine an identifier of a group/a service group associated with the UE according to the local configuration/OAM configuration/a group identifier sent by a PCF/an identifier sent by an NEF.

In some embodiments, the first information is used to indicate that the first network function performs admission control based on a service group for the first terminal.

In some embodiments, the admission control based on the service group includes, but is not limited to, at least one of the following:
the first network function adds the first terminal to a service group associated with the first terminal in a network slice; and
the first network function adds a service group in the network slice, and adds the first terminal to the service group associated with the first terminal in the network slice.

In some embodiments, if the AMF has not determined a peer NSACF, the AMF performs NSACF discovery and selection.

In some embodiments, the first information further indicates at least one of the following:
de-registering the first terminal from the network slice;
an identifier of the service group associated with the first terminal;
an identifier of the first terminal;
an authorized access type of the network slice;
an identifier of the network slice;
an identifier of the third network function;
an admission control indication, indicating to register the first terminal to the network slice; and
the admission control indication, indicating to de-register the first terminal from the network slice.

In some embodiments, the first information may further be used to indicate an update, by a local NSACF, of a number of registered second terminals.

In some embodiments, the first information may be triggered by the first terminal, and the first terminal may trigger the first terminal to register and/or the first terminal to de-register.

In some embodiments, the first terminal may send a first terminal registration request via an AMF, to trigger the AMF to send the first information to the local NSACF, requesting to register the first terminal in the network slice.

In some embodiments, the first terminal may send a first terminal de-registration request via the AMF, to trigger the AMF to send the first information to the local NSACF, requesting to de-register the first terminal from the network slice.

In some embodiments, registering the first terminal into the network slice may be triggered by a Network Slice-Specific Authentication and Authorization (NSSAA) procedure or a subscribed S-NSSAI change procedure.

In some embodiments, admission control triggers the first network function to perform an update of the number of registered terminals in the network slice.

In some embodiments, the update of the terminal number includes at least one of the following: an increase in the number of registered terminals in the network slice, and a decrease in the number of registered terminals in the network slice.

In some embodiments, the second information is used to indicate at least one of the following:
an identifier of the service group associated with the first terminal;
an identifier of the first terminal;
an authorized access type of the network slice;
an identifier of the network slice;
an identifier of the third network function;
an admission control indication, indicating the first terminal to be registered to the network slice; and
the admission control indication, indicating the first terminal to be deregistered from the network slice.

In some embodiments, the admission control indication indicates the addition of the first terminal to the network slice, that is, it indicates an increase in the number of registered terminals in the network slice.

In some embodiments, the admission control indication indicates the removal of the first terminal from the network slice, that is, it indicates a decrease in the number of registered terminals in the network slice.

In some embodiments, the first information is carried in an Nnsacf_NSAC_NumOfUEsUpdate_Request message and sent to the first network function.

In step S2103, the first network function performs the network slice admission control for the first terminal.

In some embodiments, the first network function performs admission control of the network slice for the first terminal based on a comparison result between a first number of registered second terminals in the network slice in the first network function and a first threshold.

In some embodiments, when the first information indicates that the first terminal is registered to the network slice, the first network function performs admission control of the network slice for the first terminal based on a comparison result between a first number of registered second terminals in the network slice in the first network function and a first threshold.

In some embodiments, the first number of the registered second terminal in the first network function is: a first number of the second terminal registered with the network slice in the first network function.

The first threshold is at least one of the following: a quota number of terminals for the network slice in the first network function, a threshold number of terminals for the network slice in the first network function, and a maximum number of terminals for the network slice in the first network function.

In some implementations, the quota for the number of terminals may be a number of allowed registered terminals configured for the first network function for a network slice by a second network function.

In some implementations, the threshold for the number of terminals may also be a number of allowed registered terminals configured for the first network function for the network slice by the second network function.

In some implementations, the threshold for the number of terminals is less than the quota for the number of terminals.

In some implementations, the maximum value for the number of terminals may be a maximum number of terminals that can be registered by the first network function for the network slice.

In some implementations, the second network function is configured with a terminal number quota of the network slice in the first network function, and the terminal number quota is the maximum terminal number of the network slice in the first network function.

In some embodiments,
the first number is associated with an access type of the first terminal; and
the first threshold is associated with the access type of the first terminal.

In some embodiments, a first threshold corresponding to the access type is configured for different access types.

In some embodiments, if the first network function is configured with a first threshold corresponding to the access type, whether to allow registration of the first terminal may be determined based on a comparison result between a first number of the second terminal already registered of the access type and the first threshold corresponding to the access type.

In some embodiments, if the first number is less than or equal to the first threshold, the first terminal is registered to the network slice.

In some embodiments, the first number being less than or equal to the first threshold includes at least one of the following:
the first number being less than or equal to the quota for the number of terminals;
the first number being less than or equal to the threshold for the number of terminals;
the first number being less than or equal to the maximum value for the number of terminals;
the first number being greater than or equal to the threshold for the number of terminals, and the first number being less than or equal to the maximum value for the number of terminals; and
the first number being greater than or equal to the threshold for the number of terminals, and the first number being less than or equal to the quota for the number of terminals.

In some embodiments, registering the first terminal to the network slice includes: registering the first terminal to the service group corresponding to the first terminal in the network slice.

In some embodiments, it is determined to register the first terminal to the network slice, and a first network function is configured with a second threshold, then, the first network function determines whether to register a service group associated with the first terminal into the network slice based on a comparison result between a second number of registered service groups of the network slice in the first network function and the second threshold.

In some embodiments, the method further includes:
if the service group associated with the first terminal is registered with the network slice in the first network function, registering the first terminal to the service group associated with the first terminal; or
if the service group associated with the first terminal is not registered with the network slice in the first network function, and a second number of service groups already registered with the network slice in the first network function being less than or equal to a second threshold, registering the service group associated with the first terminal in the first network function.

In some embodiments, after the first network function registers the service group associated with the first terminal, the first network function registers the first terminal to the service group.

In some embodiments, the second threshold includes one of the following:
a service group number threshold for the network slice configured by the second network function for the first network function; and
a service group number quota for the network slice configured by the second network function for the first network function.

In some embodiments, if the first terminal is allowed to register and the identifier of the service group indicated by the first information already exists in the registration table of the first network function, then a new first terminal entry is added to the identifier of the service group, and the number of registered service groups remains unchanged.

In some embodiments, if the first terminal is allowed to register and the identifier of the service group indicated by the first information does not exist in the registration table of the first network function, then the identifier of the service group is added to the registration table, the number of registered service groups increases, and a new first terminal entry is added to the identifier of the service group.

In some embodiments, if it is determined that the first terminal is registered to the network slice and the first network function is not configured with the second threshold, then the first network function performs at least one of the following:
if the network slice has the service group associated with the first terminal registered in the first network function, registering the first terminal into the service group associated with the first terminal in the network slice in the first network function; and
if the network slice does not have the service group associated with the first terminal registered in the first network function, registering the service group associated with the first terminal in the first network function.

For example, the first network function is configured with the threshold for the number of terminals and the maximum for the number of terminals for the network slice locally (i.e., within the first network function). If the first information requesting to register the first terminal and the identifier of the service group associated with the first terminal is received, the identifier of the service group has been stored or registered (or a first terminal associated with the group identifier has been registered and accepted), and the threshold for the number of terminals has been reached but has not exceeded the configured maximum for the number of terminals, then the first network function accepts the registration request of the first terminal.

In some embodiments, allowing registration of the first terminal to the network slice includes: accepting the registration request of the first terminal, adding a UE to a registration list, and increasing the first number of registered second terminals of the slice.

In some embodiments, allowing the first terminal to register to the network slice when the first number is less than or equal to the first threshold includes: if the service group to which the first terminal belongs has been registered in the first network function and the first number is less than or equal to the first threshold, allowing the first terminal to register to the service group associated with the first terminal in the network slice.

In some embodiments, if the first number is greater than the threshold for the number of terminals and the first number is less than or equal to the maximum value for the number of terminals, the first network function does not allow the registration of the service group associated with the first terminal in the first network function.

In some embodiments, the method further includes at least one of the following:
removing a number of the first terminal from the first number; and
de-registering the first terminal from the service group associated with the first terminal in the network slice;
where the first information is further used for indicating to de-register the first terminal from the network slice.

In some embodiments, the first network function deletes the identifier of the service group not registered with a terminal from the first network function.

In some embodiments, the first information indicates de-registering the first terminal from the network slice, the first network function finds an identifier of the first terminal corresponding to the first terminal, decreases the number of registered second terminals in the slice, and deletes the identifier of the first terminal. If the first terminal is the last first terminal in a service group, after deducting the number of terminals in the network slice, the first network function will delete the identifier of the service group from the list.

In step S2104, the first network function sends fifth information.

In some embodiments, the first network function sends the fifth information to the third network function.

In some embodiments, the fifth information is used to indicate at least one of the following:
a result of performing the network slice admission control;
a reason for not being registered to the network slice;
whether a number of second terminals registered with the network slice reaches a maximum value; and
whether a number of service groups registered with the network slice reaches a maximum value.

In some embodiments, the result of performing the network slice admission control includes at least one of the following:
an identifier of a network slice that allows registration of the first terminal; and
an identifier of a network slice that rejects registration of the first terminal.

In some embodiments, a reason for not registering to the network slice includes: the first number being less than or equal to the first threshold.

In some embodiments, the fifth information indicates a timer for the first terminal to re-initiate a registration request.

For example, in a registration procedure of the first terminal, if only some network slices reach a maximum number of registered users, a third network function (AMF) sends a registration accept message to the first terminal being registered. In the message, a rejected slice list carries a slice identifier rejected due to access control, a corresponding rejection cause is set as that the maximum number of users in the area of the slice has been reached, and a timer for re-initiating a request is optionally set.

For example, when all requested network slice S-NSSAI(s) in a request message sent by the third network function (AMF) to the first network function (local NSACF) have reached allowed maximum values, and if one or more subscribed slices in subscription information are marked as default slices and do not need to perform NSAC simultaneously, the AMF may decide to put these default slices into an allowed NSSAI as authorized allowed slices. Otherwise, the AMF will reject the registration request of the user UE. In a registration reject message, the AMF carries a rejected slice identifier list, where each slice is accompanied by a corresponding rejection cause value, such as that an allowed maximum number of registered users in the area of the slice has been reached. Meanwhile, a timer for re-initiating a request is optionally set.

If the rejection is due to a group threshold or quota being reached, the rejection reason indicates that a maximum group threshold or quota has been reached.

In some embodiments, the term "information" may be interchangeably used with terms such as "message", "signal", "signaling", "report", "configuration", "indication", "instruction", "command", "channel", "parameter", "field", "data", and the like.

In some embodiments, the term "send" may be interchangeably used with terms such as "emit", "report", "transmit", and the like.

The information transmission method involved in the embodiments of the present disclosure may include at least one of step S2101 to step S2104. For example, step S2101 may be implemented as an independent embodiment, step S2103 may be implemented as an independent embodiment, and step S2104 may be implemented as an independent embodiment.

For example, step S2102 in combination with step S2103 may be implemented as an independent embodiment. Step S2101 to step S2103 may be combined to be implemented as an independent embodiment. Step S2101 to step S2104 may be implemented as an independent embodiment, and step S2101 may be implemented as an independent embodiment, but it is not limited thereto.

In some embodiments, step S2101 and step S2104 are optional, and one or more of these steps may be omitted or replaced in different embodiments.

FIG. 2b is an interactive schematic diagram of an information transmission method shown according to an embodiment of the present disclosure. As shown in FIG. 2b, embodiments of the present disclosure relate to an information transmission method for a communication system 100, the method including the following steps.

In step S2201, a third network function determines a service group.

In some embodiments, the third network function determines the service group of the first terminal.

In some embodiments, the third network function may include: the Access and Mobility Management Function (AMF) in a core network.

In some embodiments, the service group may include an application group corresponding to a service.

In some embodiments, the service group may include: an XR service group.

In some embodiments, the third network function determines the service group, including the third network function determining an identifier of the service group.

In some embodiments, the identifier of the service group includes at least one of the following: an internal group identifier, and a standardized universal group identifier.

In some embodiments, a first terminal in the service group may be associated with the same service.

For example, a first terminal in the service group may be associated with the same XR service.

In some embodiments, the third network function determines a service group to which the first terminal belongs based on one of the following:
a local configuration of the third network function;
an operation administration and maintenance (OAM) configuration of the third network function;
unified data management (UDM) subscription information of the first terminal;
a service capability of the first terminal;
service group information corresponding to a permanent equipment identifier (PEI) of the first terminal; and
service group information in a UE context.

In some embodiments, step S2101 is omitted. The first terminal may send its own service group identifier to the third network function to indicate the service group. Alternatively, the above functions are by default or predefined.

In step S2202, the third network function sends first information.

In some embodiments, the third network function sends the first information to the first network function.

In some embodiments, the first network function is configured to perform admission control for the network slice within a service area associated with the first network function.

The second network function is configured to perform admission control for the network slice within a service area associated with the second network function, the service area associated with the second network function contains the service area associated with the first network function; an operation request may include: a request to register the first terminal, a request to deregister the first terminal, etc.

The third network function is configured to send the first information to the first network function based on an operation request of the first terminal. The operation request may include: a request to register the first terminal, a request to deregister the first terminal, etc.

In some embodiments, the admission control includes: Network Slice Admission Control (NSAC).

In some embodiments, the first network function includes: a local network slice admission control function (NSACF) in a core network.

In some embodiments, the second network function includes: a primary Network Slice Admission Control Function (NSACF) in the core network.

In some embodiments, the first information includes, but is not limited to, at least one of the following: a first terminal registration request, a first terminal deregistration request, and an update request of the number of registered second terminals.

In this embodiment, the number has the meaning of quantity, count, or number. For example, the number of second terminals represents the quantity or count of second terminals. In some embodiments, the first network function is configured to perform admission control on the first terminal in a service area corresponding to the first network function.

In some embodiments, the first network function is associated with at least one service area.

In some embodiments, the second network function is configured to perform global management for more than one first network function.

In some embodiments, the service area associated with the second network function contains the service area associated with the first network function.

In some embodiments, the first information is used to indicate the first network function to perform admission control of the network slice for the first terminal, where the first terminal is associated with a service group.

In some embodiments, the first information may indicate the network slice for which an admission operation is performed through S-NSSAI.

In some embodiments, the first information is triggered by a registration procedure and/or a deregistration procedure for the network slice initiated by the first terminal.

In some embodiments, the first information carries content in registration request information sent by a first terminal, such as an identity of the first terminal, and the like.

In some embodiments, the first terminal may initiate a registration procedure for one or more network slices.

In some embodiments, the first information may indicate that a first network function performs admission control on at least one network slice for the first terminal in a service group.

In some embodiments, the first information may indicate the service group of the first terminal.

In some embodiments, when the AMF does not send an identifier of a service group/a service group, a local NSACF may determine an identifier of a group/a service group associated with the UE according to the local configuration/OAM configuration/a group identifier sent by a PCF/an identifier sent by an NEF.

In some embodiments, the first information is used to indicate that the first network function performs admission control based on a service group for the first terminal.

In some embodiments, the admission control based on the service group includes, but is not limited to, at least one of the following:
the first network function adds the first terminal to a service group associated with the first terminal in a network slice; and
the first network function adds a service group in the network slice, and adds the first terminal to the service group associated with the first terminal in the network slice.

In some embodiments, if the AMF has not determined a peer NSACF, the AMF performs NSACF discovery and selection.

In some embodiments, the first information further indicates at least one of the following:
de-registering the first terminal from the network slice;
an identifier of the service group associated with the first terminal;
an identifier of the first terminal;
an authorized access type of the network slice;
an identifier of the network slice;
an identifier of the third network function;
an admission control indication, indicating to register the first terminal to the network slice; and
the admission control indication, indicating to de-register the first terminal from the network slice.

In some embodiments, the first information may further be used to indicate an update, by a local NSACF, of a number of registered second terminals.

In some embodiments, the first information may be triggered by the first terminal, and the first terminal may trigger the first terminal to register and/or the first terminal to de-register.

In some embodiments, the first terminal may send a first terminal registration request via an AMF, to trigger the AMF to send the first information to the local NSACF, requesting to register the first terminal in the network slice.

In some embodiments, the first terminal may send a first terminal de-registration request via the AMF, to trigger the AMF to send the first information to the local NSACF, requesting to de-register the first terminal from the network slice.

In some embodiments, registering the first terminal into the network slice may be triggered by a Network Slice-Specific Authentication and Authorization (NSSAA) procedure or a subscribed S-NSSAI change procedure.

In some embodiments, admission control triggers the first network function to perform an update of the number of registered terminals in the network slice.

In some embodiments, the update of the terminal number includes at least one of the following: an increase in the number of registered terminals in the network slice, and a decrease in the number of registered terminals in the network slice.

In some embodiments, the second information is used to indicate at least one of the following:
an identifier of the service group associated with the first terminal;
an identifier of the first terminal;
an authorized access type of the network slice;
an identifier of the network slice;
an identifier of the third network function;
an admission control indication, indicating the first terminal to be registered to the network slice; and
the admission control indication, indicating the first terminal to be deregistered from the network slice.

In some embodiments, the admission control indication indicates the addition of the first terminal to the network slice, that is, it indicates an increase in the number of registered terminals in the network slice.

In some embodiments, the admission control indication indicates the removal of the first terminal from the network slice, that is, it indicates a decrease in the number of registered terminals in the network slice.

In some embodiments, the first information is carried in an Nnsacf_NSAC_NumOfUEsUpdate_Request message and sent to the first network function.

In step S2203, the first network function performs the network slice admission control for the first terminal.

In some embodiments, the first network function performs admission control of the network slice for the first terminal based on a comparison result between a first number of registered second terminals in the network slice in the first network function and a first threshold.

In some embodiments, when the first information indicates that the first terminal is registered to the network slice, the first network function performs admission control of the network slice for the first terminal based on a comparison result between a first number of registered second terminals in the network slice in the first network function and a first threshold.

In some embodiments, the first number of the registered second terminal in the first network function is: a first number of the second terminal registered with the network slice in the first network function.

The first threshold is at least one of the following: a quota number of terminals for the network slice in the first network function, a threshold number of terminals for the network slice in the first network function, and a maximum number of terminals for the network slice in the first network function.

In some implementations, the quota for the number of terminals may be a number of allowed registered terminals configured for the first network function for a network slice by a second network function.

In some implementations, the threshold for the number of terminals may also be a number of allowed registered terminals configured for the first network function for the network slice by the second network function.

In some implementations, the threshold for the number of terminals is less than the quota for the number of terminals.

In some implementations, the maximum value for the number of terminals may be a maximum number of terminals that can be registered by the first network function for the network slice.

In some implementations, the second network function is configured with a terminal number quota of the network slice in the first network function, and the terminal number quota is the maximum terminal number of the network slice in the first network function.

In some embodiments,
the first number is associated with an access type of the first terminal; and
the first threshold is associated with the access type of the first terminal.

In some embodiments, a first threshold corresponding to the access type is configured for different access types.

In some embodiments, if the first network function is configured with a first threshold corresponding to the access type, whether to allow registration of the first terminal may be determined based on a comparison result between a first number of the second terminal already registered of the access type and the first threshold corresponding to the access type.

In some embodiments, if the first number is less than or equal to the first threshold, the first terminal is registered to the network slice.

In some embodiments, the first number being less than or equal to the first threshold includes at least one of the following:
the first number being less than or equal to the quota for the number of terminals;
the first number being less than or equal to the threshold for the number of terminals;
the first number being less than or equal to the maximum value for the number of terminals;
the first number being greater than or equal to the threshold for the number of terminals, and the first number being less than or equal to the maximum value for the number of terminals; and
the first number being greater than or equal to the threshold for the number of terminals, and the first number being less than or equal to the quota for the number of terminals.

In some embodiments, registering the first terminal to the network slice includes: registering the first terminal to the service group corresponding to the first terminal in the network slice.

In some embodiments, it is determined to register the first terminal to the network slice, and a first network function is configured with a second threshold, then, the first network function determines whether to register a service group associated with the first terminal into the network slice based on a comparison result between a second number of registered service groups of the network slice in the first network function and the second threshold.

In some embodiments, the method further includes:
if the service group associated with the first terminal is registered with the network slice in the first network function, registering the first terminal to the service group associated with the first terminal; or
if the service group associated with the first terminal is not registered with the network slice in the first network function, and a second number of service groups already registered with the network slice in the first network function is less than or equal to a second threshold, registering the service group associated with the first terminal in the first network function.

In some embodiments, after the first network function registers the service group associated with the first terminal, the first network function registers the first terminal to the service group.

In some embodiments, the second threshold includes one of the following:
a service group number threshold for the network slice configured by the second network function for the first network function; and
a service group number quota for the network slice configured by the second network function for the first network function.

In some embodiments, if the first terminal is allowed to register and the identifier of the service group indicated by the first information already exists in the registration table of the first network function, then a new first terminal entry is added to the identifier of the service group, and the number of registered service groups remains unchanged.

In some embodiments, if the first terminal is allowed to register and the identifier of the service group indicated by the first information does not exist in the registration table of the first network function, then the identifier of the service group is added to the registration table, the number of registered service groups increases, and a new first terminal entry is added to the identifier of the service group.

In some embodiments, if it is determined that the first terminal is registered to the network slice and the first network function is not configured with the second threshold, then the first network function performs at least one of the following:
if the network slice has the service group associated with the first terminal registered in the first network function, registering the first terminal into the service group associated with the first terminal in the network slice in the first network function; and
if the network slice does not have the service group associated with the first terminal registered in the first network function, registering the service group associated with the first terminal in the first network function

For example, the first network function is configured with the threshold for the number of terminals and the maximum for the number of terminals for the network slice locally (i.e., within the first network function). If the first information requesting to register the first terminal and the identifier of the service group associated with the first terminal is received, the identifier of the service group has been stored or registered (or a first terminal associated with the group identifier has been registered and accepted), and the threshold for the number of terminals has been reached but has not exceeded the configured maximum for the number of terminals, then the first network function accepts the registration request of the first terminal.

In some embodiments, allowing registration of the first terminal to the network slice includes: accepting the registration request of the first terminal, adding a UE to a registration list, and increasing the first number of registered second terminals of the slice.

In some embodiments, allowing the first terminal to register to the network slice when the first number is less than or equal to the first threshold includes: if the service group to which the first terminal belongs has been registered in the first network function and the first number is less than or equal to the first threshold, allowing the first terminal to register to the service group associated with the first terminal in the network slice.

In some embodiments, if the first number is greater than the threshold for the number of terminals and the first number is less than or equal to the maximum value for the number of terminals, the first network function does not allow the registration of the service group associated with the first terminal in the first network function.

In some embodiments, the method further includes at least one of the following:
removing a number of the first terminal from the first number; and
de-registering the first terminal from the service group associated with the first terminal in the network slice;
where the first information is further used for indicating to de-register the first terminal from the network slice.

In some embodiments, the first network function deletes the identifier of the service group without a registered terminal from the first network function.

In some embodiments, the first information indicates to de-register the first terminal from the network slice, the first network function finds an identifier of the first terminal corresponding to the first terminal, decreases the number of registered second terminals in the slice, and deletes the identifier of the first terminal. If the first terminal is the last first terminal in a service group, after deducting the number of terminals in the network slice, the first network function will delete the identifier of the service group from the list.

In step S2204, the first network function sends second information.

In some embodiments, the first network function sends the second information to the second network function.

In some embodiments, when the first number is greater than the first threshold, the first network function sends the second information to the second network function.

In some embodiments, the second information is used to indicate that the second network function performs admission control associated with the network slice for the first terminal.

In some embodiments, the first number being greater than the first threshold includes at least one of the following:
the first number being greater than the quota for the number of terminals;
the first number being greater than the threshold for the number of terminals; and
the first number being greater than the maximum value of the number of terminals.

In some embodiments, the second network function performing the admission control associated with the network slice for the first terminal includes one of the following:
the second network function updating the first threshold;
the second network function performing admission control on the first terminal based on an NSAC policy of the second network function itself.

In some embodiments, the second information may carry the content indicated by the first information.

In some embodiments, the second information is used to indicate at least one of the following:
an identifier of the service group associated with the first terminal;
an identifier of the first terminal;
an authorized access type of the network slice;
an identifier of the network slice;
an identifier of the third network function;
an admission control indication, indicating to register the first terminal to the network slice; and
the admission control indication, indicating to de-register the first terminal from the network slice.

For example, the first network function is configured with the threshold for the number of terminals and the maximum number of terminals for the network slice locally (i.e., in the first network function). If first information is received requesting to register a first terminal and an identifier of a service group associated with the first terminal, the identifier of the service group has been saved or registered (or an associated first terminal in the group identifier has been registered/accepted), and the threshold for the number of terminals has been reached, and the configured maximum value for the number of terminals has been reached, the local NSACF sends a request to a second network function to perform admission control. A primary NSACF carries an updated quota in a response message to the local NSACF, for the local NSACF to perform NSAC for UEs associated with the group identifier.

In some embodiments, the second information may be carried in an Nnscf_NSAC_NumOfUEsUpdate_Request message, sent by the first network function to the second network function.

In step S2205, the second network function determines an updated first threshold.

In some embodiments, determining the updated first threshold by the second network function may be determined by at least one of the following:
the first network function; the second network function; and a communication protocol.

In some embodiments, updating the first threshold includes updating at least one of the following:
the quota for the number of terminals corresponding to the access type of the network slice in the first network function;
the threshold for the number of terminals corresponding to the access type of the network slice in the first network function;
the maximum value for the number of terminals corresponding to the access type of the network slice in the first network function;
the quota for the number of terminals corresponding to the network slice in the first network function;
the threshold for the number of terminals corresponding to the network slice in the first network function; and
the maximum value for the number of terminals corresponding to the network slice in the first network function.

In some embodiments, the second network function determines the first threshold based on a maximum value of a globally registered second terminal number managed by the second network function.

In some embodiments, the second network function may adjust the first threshold of at least one first network function under the jurisdiction of the second network function.

In some embodiments, the second network function may update the first threshold of the first network function based on at least one of the following the jurisdiction of the second network function:
an admission type of the first terminal;
a load of the first network function;
a number of terminals allowed to be registered by the second network function; and
a number of terminals allowed to be registered globally by the second network function.

In step S2206, the second network function sends third information.

In some embodiments, the second network function sends the third information to the first network function.

In some embodiments, the third information is used to indicate the updated first threshold.

In some embodiments, the third information is sent by the second network function in response to the second information.

For example, the first network function is configured with the threshold for the number of terminals and the maximum number of terminals for the network slice locally (i.e., in the first network function). If first information is received requesting to register a first terminal and an identifier of a service group associated with the first terminal, the identifier of the service group has been saved or registered (or an associated first terminal in the group identifier has been registered/accepted), and the threshold for the number of terminals has been reached, and the configured maximum value for the number of terminals has been reached, the local NSACF sends a request to a second network function to perform admission control. A primary NSACF carries an updated quota in a response message to the local NSACF, for the local NSACF to perform NSAC for UEs associated with the group identifier.

In some embodiments, the second information may be carried in an Nnscf_NSAC_NumOfUEsUpdate_Request message, sent by the first network function to the second network function.

In step S2207, the first network function performs the network slice admission control for the first terminal.

In some embodiments, the first network function performs the network slice admission control on the first terminal based on a comparison result of the first number and a third threshold, where the third threshold is an updated value of the first threshold.

In some embodiments, the first network function performs the network slice admission control for the first terminal based on the comparison result of the first number and the third threshold. The third threshold is an updated value of the first threshold. This is similar to the manner in step S2203 where the first network function determines whether to register the first terminal to the network slice based on the comparison result of the first number and the first threshold, and will not be described again here.

In some embodiments, based on a comparison result that the first value is greater than the updated first threshold, the first network function rejects the registration of the first terminal to the network slice.

In some embodiments, the first network function rejecting the registration of the first terminal to the network slice includes: the first network function rejecting the registration request sent by the third network function.

In step S2208, the first network function sends fifth information.

In some embodiments, the first network function sends the fifth information to the third network function.

In some embodiments, the fifth information is used to indicate at least one of the following:
a result of performing the network slice admission control;
a reason for not being registered to the network slice;
whether a number of second terminals registered with the network slice reaches a maximum value; and
whether a number of service groups registered with the network slice reaches a maximum value.

In some embodiments, the result of performing the network slice admission control includes at least one of the following:
an identifier of a network slice that allows registration of the first terminal; and
an identifier of a network slice that rejects registration of the first terminal.

In some embodiments, a reason for not registering to the network slice includes: the first number being less than or equal to the first threshold.

In some embodiments, the fifth information indicates a timer for the first terminal to re-initiate a registration request.

For example, in a registration procedure of the first terminal, if only some network slices reach a maximum number of registered users, a third network function (AMF) sends a registration accept message to the first terminal being registered. In the message, a rejected slice list carries a slice identifier rejected due to access control, a corresponding rejection cause is set as that the maximum number of users in the area of the slice has been reached, and a timer for re-initiating a request is optionally set.

For example, when all requested network slice S-NSSAI(s) in a request message sent by the third network function (AMF) to the first network function (local NSACF) have reached allowed maximum values, and if one or more subscribed slices in subscription information are marked as default slices and do not need to perform NSAC simultaneously, the AMF may decide to put these default slices into an allowed NSSAI as authorized allowed slices. Otherwise, the AMF will reject the registration request of the user UE. In a registration reject message, the AMF carries a rejected slice identifier list, where each slice is accompanied by a corresponding rejection cause value, such as that an allowed maximum number of registered users in the area of the slice has been reached. Meanwhile, a timer for re-initiating a request is optionally set.

If the rejection is due to a group threshold or quota being reached, the rejection reason indicates that a maximum group threshold or quota has been reached.

In some embodiments, the term "information" may be interchangeably used with terms such as "message", "signal", "signaling", "report", "configuration", "indication", "instruction", "command", "channel", "parameter", "field", "data", and the like.

In some embodiments, the term "send" may be interchangeably used with terms such as "emit", "report", "transmit", and the like.

The information transmission method involved in the embodiments of the present disclosure may include at least one of step S2201 to step S2206. For example, step S2201 may be implemented as an independent embodiment, step S2203 may be implemented as an independent embodiment, step S2204 may be implemented as an independent embodiment, step S2205 may be implemented as an independent embodiment, step S2206 may be implemented as an independent embodiment, step S2207 may be implemented as an independent embodiment, and step S2208 may be implemented as an independent embodiment.

For example, step S2201 in combination with step S2208 may be implemented as an independent embodiment. Step S2202 to step S2208 may be combined to be implemented as an independent embodiment. Step S2204 to step S2206 may be implemented as an independent embodiment, but it is not limited thereto.

In some embodiments, step S2201 and step S2208 are optional, and one or more of these steps may be omitted or replaced in different embodiments.

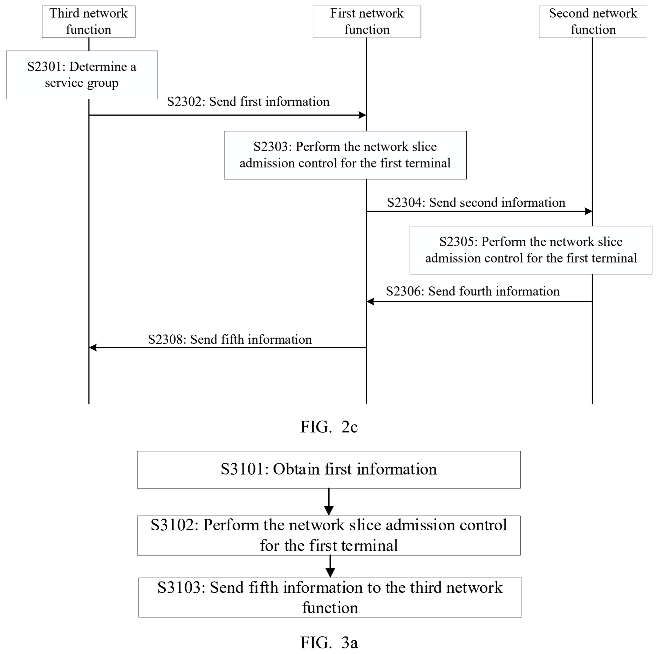

FIG. 2c is an interactive schematic diagram illustrating an information transmission method shown according to an embodiment of the present disclosure. As shown in FIG. 2c, embodiments of the present disclosure relate to an information transmission method for a communication system 100, the method including the following steps.

In step S2301, a third network function determines a service group.

In some embodiments, the third network function determines the service group of the first terminal.

In some embodiments, the third network function may include: the Access and Mobility Management Function (AMF) in a core network.

In some embodiments, the service group may include an application group corresponding to a service.

In some embodiments, the service group may include: an XR service group.

In some embodiments, the third network function determines the service group, including the third network function determining an identifier of the service group.

In some embodiments, the identifier of the service group includes at least one of the following: an internal group identifier, and a standardized universal group identifier.

In some embodiments, a first terminal in the service group may be associated with the same service.

For example, a first terminal in the service group may be associated with the same XR service.

In some embodiments, the third network function determines a service group to which the first terminal belongs based on one of the following:
a local configuration of the third network function;
an operation administration and maintenance (OAM) configuration of the third network function;
unified data management (UDM) subscription information of the first terminal;
a service capability of the first terminal;
service group information corresponding to a permanent equipment identifier (PEI) of the first terminal; and
service group information in a UE context.

In some embodiments, step S2101 is omitted. The first terminal may send its own service group identifier to the third network function to indicate the service group. Alternatively, the above function is by default or predefined.

In step S2302, the third network function sends first information.

In some embodiments, the third network function sends the first information to the first network function.

In some embodiments, the first network function is configured to perform admission control for the network slice within a service area associated with the first network function.

The second network function is configured to perform admission control for the network slice within a service area associated with the second network function, the service area associated with the second network function contains the service area associated with the first network function; an operation request may include: a request to register the first terminal, a request to deregister the first terminal, etc.

The third network function is configured to send the first information to the first network function based on an operation request of the first terminal. The operation request may include: a request to register the first terminal, a request to deregister the first terminal, etc.

In some embodiments, the admission control includes: Network Slice Admission Control (NSAC).

In some embodiments, the first network function includes: a local network slice admission control function (NSACF) in a core network.

In some embodiments, the second network function includes: a primary Network Slice Admission Control Function (NSACF) in the core network.

In some embodiments, the first information includes, but is not limited to, at least one of the following: a first terminal registration request, a first terminal deregistration request, and an update request of the number of registered second terminals.

In this embodiment, the number has the meaning of quantity, count, or number. For example, the number of second terminals represents the quantity or count of second terminals.

In some embodiments, the first network function is configured to perform admission control on the first terminal in a service area corresponding to the first network function.

In some embodiments, the first network function is associated with at least one service area.

In some embodiments, the second network function is configured to perform global management for more than one first network function.

In some embodiments, the service area associated with the second network function contains the service area associated with the first network function.

In some embodiments, the first information is used to indicate the first network function to perform admission control of the network slice for the first terminal, where the first terminal is associated with a service group.

In some embodiments, the first information may indicate the network slice for which an admission operation is performed through S-NSSAI.

In some embodiments, the first information is triggered by a registration procedure and/or a deregistration procedure for the network slice initiated by the first terminal.

In some embodiments, the first information carries content in registration request information sent by a first terminal, such as an identity of the first terminal, and the like.

In some embodiments, the first terminal may initiate a registration procedure for one or more network slices.

In some embodiments, the first information may indicate that a first network function performs admission control on at least one network slice for the first terminal in a service group.

In some embodiments, the first information may indicate the service group of the first terminal.

In some embodiments, when the AMF does not send an identifier of a service group/a service group, a local NSACF may determine an identifier of a group/a service group associated with the UE according to the local configuration/OAM configuration/a group identifier sent by a PCF/an identifier sent by an NEF.

In some embodiments, the first information is used to indicate that the first network function performs admission control based on a service group for the first terminal.

In some embodiments, the admission control based on the service group includes, but is not limited to, at least one of the following:
the first network function adds the first terminal to a service group associated with the first terminal in a network slice; and
the first network function adds a service group in the network slice, and adds the first terminal to the service group associated with the first terminal in the network slice.

In some embodiments, if the AMF has not determined a peer NSACF, the AMF performs NSACF discovery and selection.

In some embodiments, the first information further indicates at least one of the following:
de-registering the first terminal from the network slice;
an identifier of the service group associated with the first terminal;
an identifier of the first terminal;
an authorized access type of the network slice;
an identifier of the network slice;
an identifier of the third network function;
an admission control indication, instructing to register the first terminal to the network slice; and
the admission control indication, instructing to de-register the first terminal from the network slice.

In some embodiments, the first information may further be used to indicate an update, by a local NSACF, of a number of registered second terminals.

In some embodiments, the first information may be triggered by the first terminal, and the first terminal may trigger the first terminal to register and/or the first terminal to de-register.

In some embodiments, the first terminal may send a first terminal registration request via an AMF, to trigger the AMF to send the first information to the local NSACF, requesting to register the first terminal in the network slice.

In some embodiments, the first terminal may send a first terminal de-registration request via the AMF, to trigger the AMF to send the first information to the local NSACF, requesting to de-register the first terminal from the network slice.

In some embodiments, registering the first terminal into the network slice may be triggered by a Network Slice-Specific Authentication and Authorization (NSSAA) procedure or a subscribed S-NSSAI change procedure.

In some embodiments, admission control triggers the first network function to perform an update of the number of registered terminals in the network slice.

In some embodiments, the update of the terminal number includes at least one of the following: an increase in the number of registered terminals in the network slice, and a decrease in the number of registered terminals in the network slice.

In some embodiments, the second information is used for indicating at least one of the following:
an identifier of the service group associated with the first terminal;
an identifier of the first terminal;
an authorized access type of the network slice;
an identifier of the network slice;
an identifier of the third network function;
an admission control indication, instructing to register the first terminal to the network slice; and
the admission control indication, instructing to de-register the first terminal from the network slice.

In some embodiments, the admission control indication indicates the addition of the first terminal to the network slice, that is, it indicates an increase in the number of registered terminals in the network slice.

In some embodiments, the admission control indication indicates the removal of the first terminal from the network slice, that is, it indicates a decrease in the number of registered terminals in the network slice.

In some embodiments, the first information is carried in an Nnsacf_NSAC_NumOfUEsUpdate_Request message and sent to the first network function.

In step S2303, the first network function performs the network slice admission control for the first terminal.

In some embodiments, the first network function performs admission control of the network slice for the first terminal based on a comparison result between a first number of the second terminal already registered with the network slice in the first network function and a first threshold.

In some embodiments, when the first information indicates that the first terminal is registered to the network slice, the first network function performs admission control of the network slice for the first terminal based on a comparison result between a first number of the second terminal already registered with the network slice in the first network function and a first threshold.

In some embodiments, the first number of the second terminal registered in the first network function is: a first number of the second terminal registered in the network slice of the first network function.

The first threshold is at least one of the following: a quota number of terminals for the network slice in the first network function, a threshold number of terminals for the network slice in the first network function, and a maximum number of terminals for the network slice in the first network function.

In some implementations, the quota for the number of terminals may be a number of allowed registered terminals configured for the first network function for a network slice by a second network function.

In some implementations, the threshold for the number of terminals may also be a number of allowed registered terminals configured for the first network function for the network slice by the second network function.

In some implementations, the threshold for the number of terminals is less than the quota for the number of terminals.

In some implementations, the maximum value for the number of terminals may be a maximum number of terminals that can be registered by the first network function for the network slice.

In some implementations, the second network function is configured with a terminal number quota of the network slice in the first network function, and the terminal number quota is the maximum terminal number of the network slice in the first network function.

In some embodiments,
the first number is associated with an access type of the first terminal; and
the first threshold is associated with the access type of the first terminal.

In some embodiments, a first threshold corresponding to the access type is configured for different access types.

In some embodiments, if the first network function is configured with a first threshold corresponding to the access type, whether to allow registration of the first terminal may be determined based on a comparison result between a first number of the second terminal already registered of the access type and the first threshold corresponding to the access type.

In some embodiments, if the first number is less than or equal to the first threshold, the first terminal is registered to the network slice.

In some embodiments, the first number being less than or equal to the first threshold includes at least one of the following:
the first number being less than or equal to the quota for the number of terminals;
the first number being less than or equal to the threshold for the number of terminals;
the first number being less than or equal to the maximum value for the number of terminals;
the first number being greater than or equal to the threshold for the number of terminals, and the first number being less than or equal to the maximum value for the number of terminals; and
the first number being greater than or equal to the threshold for the number of terminals, and the first number being less than or equal to the quota for the number of terminals.

In some embodiments, registering the first terminal to the network slice includes: registering the first terminal to the service group corresponding to the first terminal in the network slice.

In some embodiments, it is determined to register the first terminal to the network slice, and a first network function is configured with a second threshold, then, the first network function determines whether to register a service group associated with the first terminal into the network slice based on a comparison result between a second number of registered service groups of the network slice in the first network function and the second threshold.

In some embodiments, the method further includes:
if the service group associated with the first terminal is registered with the network slice in the first network function, registering the first terminal to the service group associated with the first terminal; or
if the service group associated with the first terminal is not registered with the network slice in the first network function, and a second number of service groups already registered with the network slice in the first network function being less than or equal to a second threshold, registering the service group associated with the first terminal in the first network function.

In some embodiments, after the first network function registers the service group associated with the first terminal, the first network function registers the first terminal to the service group.

In some embodiments, the second threshold includes one of the following:
a service group number threshold for the network slice configured by the second network function for the first network function; and
a service group number quota for the network slice configured by the second network function for the first network function.

In some embodiments, if the first terminal is allowed to register and the identifier of the service group indicated by the first information already exists in the registration table of the first network function, then a new first terminal entry is added to the identifier of the service group, and the number of registered service groups remains unchanged.

In some embodiments, if the first terminal is allowed to register and the identifier of the service group indicated by the first information does not exist in the registration table of the first network function, then the identifier of the service group is added to the registration table, the number of registered service groups increases, and a new first terminal entry is added to the identifier of the service group.

In some embodiments, if it is determined that the first terminal is registered to the network slice and the first network function is not configured with the second threshold, then the first network function performs at least one of the following:
if the network slice has the service group associated with the first terminal registered in the first network function, registering the first terminal into the service group associated with the first terminal in the network slice in the first network function; and
if the network slice does not have the service group associated with the first terminal registered in the first network function, registering the service group associated with the first terminal in the first network function.

For example, the first network function is configured with the threshold for the number of terminals and the maximum for the number of terminals for the network slice locally (i.e., within the first network function). If the first information requesting to register the first terminal and the identifier of the service group associated with the first terminal is received, the identifier of the service group has been stored or registered (or a first terminal associated with the group identifier has been registered and accepted), and the threshold for the number of terminals has been reached but has not exceeded the configured maximum for the number of terminals, then the first network function accepts the registration request of the first terminal.

In some embodiments, allowing registration of the first terminal to the network slice includes: accepting the registration request of the first terminal, adding a UE to a registration list, and increasing the first number of registered second terminals of the slice.

In some embodiments, allowing the first terminal to register to the network slice when the first number is less than or equal to the first threshold includes: if the service group to which the first terminal belongs has been registered in the first network function and the first number is less than or equal to the first threshold, allowing the first terminal to register to the service group associated with the first terminal in the network slice.

In some embodiments, if the first number is greater than the threshold for the number of terminals and the first number is less than or equal to the maximum value for the number of terminals, the first network function does not allow the registration of the service group associated with the first terminal in the first network function.

In some embodiments, the method further includes at least one of the following:
removing a number of the first terminal from the first number; and
de-registering the first terminal from the service group associated with the first terminal in the network slice;
where the first information is further used for instructing to de-register the first terminal from the network slice.

In some embodiments, the first network function removes an identifier of the service group without a registered terminal from the first network function.

In some embodiments, the first information indicates to de-register the first terminal from the network slice, the first network function finds an identifier of the first terminal corresponding to the first terminal, decreases the number of registered second terminals in the slice, and deletes the identifier of the first terminal. If the first terminal is the last first terminal in a service group, after deducting the number of terminals in the network slice, the first network function will delete the identifier of the service group from the list.

In step S2304, the first network function sends second information.

In some embodiments, the first network function sends the second information to the second network function.

In some embodiments, when the first number is greater than the first threshold, the first network function sends the second information to the second network function.

In some embodiments, the second information is used to indicate that the second network function performs admission control associated with the network slice for the first terminal.

In some embodiments, the first number being greater than the first threshold includes at least one of the following:
the first number being greater than the quota for the number of terminals;
the first number being greater than the threshold for the number of terminals; and
the first number being greater than the maximum value of the number of terminals.

In some embodiments, the second network function performing the admission control associated with the network slice for the first terminal includes one of the following:
the second network function updating the first threshold;
the second network function performing admission control on the first terminal based on an NSAC policy of the second network function itself.

In some embodiments, the second information may carry the content indicated by the first information.

In some embodiments, the second information is used to indicate at least one of the following:
an identifier of the service group associated with the first terminal;
an identifier of the first terminal;
an authorized access type of the network slice;
an identifier of the network slice;
an identifier of the third network function;
an admission control indication, instructing to register the first terminal to the network slice; and
the admission control indication, instructing to de-register the first terminal from the network slice.

For example, a first network function is configured with the threshold for the number of terminals and the maximum number of terminals for the network slice locally (i.e., in the first network function). If first information is received requesting to register a first terminal and an identifier of a service group associated with the first terminal, the identifier of the service group has been saved or registered (or an associated first terminal in the group identifier has been registered/accepted), and the threshold for the number of terminals has been reached, and the configured maximum value for the number of terminals has been reached, the local NSACF sends a request to a second network function to perform admission control. The primary NSACF locally performs NSAC for the UE associated with the group identifier (based on an NSAC policy of the primary NSACF, accepts or rejects the registration admission request of the UE).

In some embodiments, the second information may be carried in the Nnscf_NSAC_NumOfUEsUpdate_Request message, sent by the first network function to the second network function.

In step S2305, the second network function performs the network slice admission control for the first terminal.

In some embodiments, the network slice admission control is performed for the first terminal based on a comparison result between a third number of third terminals registered with the network slice in the first network function and a fourth threshold.

In some embodiments, the first threshold is less than or equal to a fourth threshold.

In some embodiments, the fourth threshold may include, but is not limited to, one of the following: the threshold for the number of terminals for global of the second network function.

In some embodiments, a third number of third terminals registered in the second network function is: the third number of the third terminals registered by the network slice in the second network function.

In some embodiments, performing the network slice admission control for the first terminal, based on the comparison result between the third number of the third terminal already registered in the second network function and the fourth threshold, may be determined by one of the following: the first network function; the second network function; and a communication protocol.

In some embodiments, the fourth threshold is at least one of the following: a quota number of terminals for the network slice in the second network function, a threshold number of terminals for the network slice in the second network function, and a maximum number of terminals for the network slice in the second network function.

In some implementations, the quota for the number of terminals may be a number configured for the second network function of the network slice that allows the registration of terminals.

In some implementations, the threshold for the number of terminals may also be a number configured for the second network function of the network slice that allows the registration of terminals.

In some implementations, the threshold for the number of terminals is less than the quota for the number of terminals.

In some implementations, the maximum value for the number of terminals may be a maximum value of terminal numbers that can be registered globally by the second network function.

In some implementations, the quota for the number of terminals is the maximum number of terminals for the network slice in the second network function.

In some embodiments,
the first number is associated with an access type of the first terminal; and
the first threshold is associated with the access type of the first terminal.

In some embodiments, a fourth threshold corresponding to the access type is configured for different access types.

In some embodiments, if the first network function is configured with a fourth threshold corresponding to the access type, it may be determined whether to allow the first terminal to register based on a comparison result between a third number of the third terminal already registered for the access type and the fourth threshold corresponding to the access type.

In some embodiments, if the second network function is not configured with a fifth threshold corresponding to the service group, it may be determined whether to allow the first terminal to register based on a comparison result between a number of the second terminal already registered in the global scope of the second network function and the fourth threshold of the third terminal already registered in the global scope of the second network function.

In some embodiments, if the third number is less than or equal to the fourth threshold, the first terminal is registered to the network slice.

In some embodiments: the third number being less than or equal to the fourth threshold includes at least one of the following:
the third number being less than or equal to the quota for the number of terminals;
the third number being less than or equal to the threshold for the number of terminals;
the third number being less than or equal to the maximum value for the number of terminals;
the third number being greater than or equal to the threshold for the number of terminals, and the third number being less than or equal to the maximum value for the number of terminals; and
the third number being greater than or equal to the threshold for the number of terminals, and the third number being less than or equal to the quota for the number of terminals.

In some embodiments, registering the first terminal to the network slice includes: registering the first terminal to a service group corresponding to the first terminal in the network slice.

In some embodiments, when it is determined to register the first terminal to the network slice and the second network function is configured with a fifth threshold, the second network function determines whether to register a service group associated with the first terminal to the network slice based on a comparison result between a fourth number of the service group already registered in the second network function and the fifth threshold.

In some embodiments, the method further includes:
if the service group associated with the first terminal has been registered with the network slice in the second network function, registering the first terminal to the service group associated with the first terminal; or
if the service group associated with the first terminal has not been registered with the network slice in the second network function, and a fourth number of service groups registered with the network slice in the second network function is less than or equal to a fifth threshold, registering the service group associated with the first terminal in the second network function.

In some embodiments, after the second network function registers the service group associated with the first terminal, the second network function registers the first terminal to the service group.

In some embodiments, the fifth threshold includes one of the following:
a service group number threshold for the network slice of the second network function; and
a service group number quota for the network slice of the second network function.

In some embodiments, if the first terminal is allowed to register and an identifier of the service group indicated by the second information already exists in a registration table of the second network function, a new first terminal entry is added to the identifier of the service group, and the number of registered service groups remains unchanged.

In some embodiments, if the first terminal is allowed to register and the identifier of the service group indicated by the second information does not exist in the registration table of the second network function, the identifier of the service group is added to the registered registry, the number of registered service groups increases, and a new first terminal entry is added to the identifier of the service group.

In some embodiments, when it is determined to register the first terminal into the network slice and the second network function is not configured with the fifth threshold, the second network function performs at least one of the following:
if the network slice has the service group associated with the first terminal registered in the second network function, registering the first terminal into the service group associated with the first terminal in the network slice in the second network function; and
if the network slice does not have the service group associated with the first terminal registered in the second network function, registering the service group associated with the first terminal in the second network function.

In some embodiments, allowing the first terminal to register to the network slice includes: accepting the registration request of the first terminal, adding a UE to a registration list, and increasing the third number of the registered third terminals in the network slice.

In some embodiments, if the third number is less than or equal to the fourth threshold, allowing the first terminal to register to the network slice includes: if the service group to which the first terminal belongs has already been registered in the second network function, and the third number is less than or equal to the fourth threshold, allowing the first terminal to register to the service group associated with the first terminal in the network slice.

In some embodiments, if the third number is greater than the threshold for the number of terminals and the third number is less than or equal to the maximum value for the number of terminals, the second network function does not allow the registration of the service group associated with the first terminal in the second network function.

In one embodiment, if the second network function determines that the third number is greater than the fourth threshold, and does not allow registration of the first terminal to the network slice.

In some embodiments, the third number being greater than the fourth threshold includes at least one of the following:
the third number being greater than the quota for the number of terminals;
the third number being greater than the threshold for the number of terminals; and
the third number being greater than the maximum value for the number of terminals.

In step S2306, fourth information is sent to the first network function.

In some embodiments, the fourth information is used to indicate whether the second network function allows the first terminal to register to the network slice.

In some embodiments, the fourth information is sent by the second network function in response to the second information.

In some embodiments, the fourth information is carried in the Nnscf_NSAC_NumOfUEsUpdate_Response message.

In step S2307, the first network function sends fifth information to the third network function.

In some embodiments, the first network function sends the fifth information to the third network function.

In some embodiments, the fifth information is used to indicate at least one of the following:
a result of performing the network slice admission control;
a reason for not being registered to the network slice;
whether a number of second terminals registered with the network slice reaches a maximum value; and
whether a number of service groups registered with the network slice reaches a maximum value.

In some embodiments, the result of performing the network slice admission control includes at least one of the following:
an identifier of a network slice that allows registration of the first terminal; and
an identifier of a network slice that rejects registration of the first terminal.

In some embodiments, a reason for not registering to the network slice includes: the first number being less than or equal to the first threshold.

In some embodiments, the fifth information indicates a timer for the first terminal to re-initiate a registration request.

For example, in a registration procedure of the first terminal, if only some network slices reach a maximum number of registered users, a third network function (AMF) sends a registration accept message to the first terminal being registered. In the message, a rejected slice list carries a slice identifier rejected due to access control, a corresponding rejection cause is set as that the maximum number of users in the area of the slice has been reached, and a timer for re-initiating a request is optionally set.

For example, when all requested network slice S-NSSAI(s) in a request message sent by the third network function (AMF) to the first network function (local NSACF) have reached allowed maximum values, and if one or more subscribed slices in subscription information are marked as default slices and do not need to perform NSAC simultaneously, the AMF may decide to put these default slices into an allowed NSSAI as authorized allowed slices. Otherwise, the AMF will reject the registration request of the user UE. In a registration reject message, the AMF carries a rejected slice identifier list, where each slice is accompanied by a corresponding rejection cause value, such as that an allowed maximum number of registered users in the area of the slice has been reached. Meanwhile, a timer for re-initiating a request is optionally set.

If the rejection is due to a group threshold or quota being reached, the rejection reason indicates that a maximum group threshold or quota has been reached.

In some embodiments, the term "information" may be interchangeably used with terms such as "message", "signal", "signaling", "report", "configuration", "indication", "instruction", "command", "channel", "parameter", "field", "data", and the like.

In some embodiments, the term "send" may be interchangeably used with terms such as "emit", "report", "transmit", and the like.

The information transmission method involved in the embodiments of the present disclosure may include at least one of step S2301 to step S2306. For example, step S2301 may be implemented as an independent embodiment, step S2303 may be implemented as an independent embodiment, step S2304 may be implemented as an independent embodiment, step S2305 may be implemented as an independent embodiment, step S2306 may be implemented as an independent embodiment, and step S2307 may be implemented as an independent embodiment.

For example, step S2301 in combination with step S2307 may be implemented as an independent embodiment. Step S2302 to step S2307 may be combined to be implemented as an independent embodiment. Step S2305 to step S2306 may be implemented as an independent embodiment, but it is not limited thereto.

In some embodiments, step S2301 and step S3107 are optional, and one or more of these steps may be omitted or replaced in different embodiments.

FIG. 3a is a schematic flowchart of an information transmission method according to an embodiment of the present disclosure. As shown in FIG. 3a, the information transmission method involved in the embodiment of the present disclosure is executed by a first network function 1031, and the method includes the following steps.

In step S3101, first information is obtained.

In some embodiments, for optional implementation manners of step S3101, reference may be made to the optional implementation manner of step S2102 in FIG. 2a and other relevant parts in the embodiments related to FIG. 2a, which are not repeated herein.

In some embodiments, the first network function receives the first information sent by the third network function, but is not limited thereto; it may also receive first information sent by other entities.

In some embodiments, the first network function obtains the first information specified by the protocol.

In some embodiments, the first network function obtains the first information from the upper layer(s).

In some embodiments, the first network function performs processing to obtain the first information.

In some embodiments, step S3101 is omitted, the first network function autonomously implements the function indicated by the first information, or the aforementioned function is default.

In step S3102, the network slice admission control is performed for the first terminal.

In some embodiments, for optional implementation manners of step S3102, reference may be made to the optional implementation manner of step S2103 in FIG. 2a and other relevant parts in the embodiments related to FIG. 2a, which are not repeated herein.

In step S3103, fifth information is sent to the third network function.

In some embodiments, for optional implementation manners of step S3103, reference may be made to the optional implementation manner of step S2104 in FIG. 2a and other relevant parts in the embodiments related to FIG. 2a, which are not repeated herein.

The information transmission method involved in the embodiments of the present disclosure may include at least one of steps S3101 to S3103. For example, step S3101 may be implemented as a separate embodiment, step S3102 may be implemented as a separate embodiment, and step S3103 may be implemented as a separate embodiment.

In some embodiments, steps S3101 and S3103 are optional, and one or more of these steps may be omitted or substituted in different embodiments.

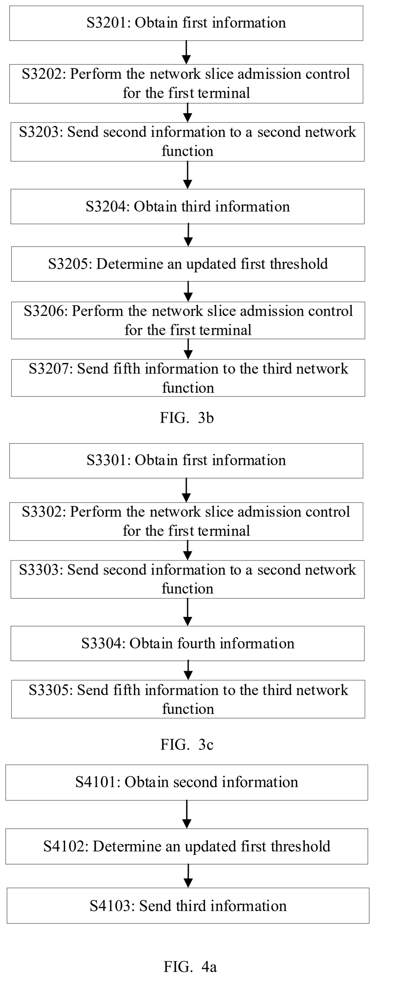

FIG. 3b is a schematic flowchart of an information transmission method according to an embodiment of the present disclosure. As shown in FIG. 3b, the information transmission method involved in the embodiment of the present disclosure is executed by the first network function 1031, and the method includes the following steps.

In step S3201, first information is obtained.

In some embodiments, for optional implementation manners of step S3201, reference may be made to the optional implementation manner of step S2202 in FIG. 2b and other relevant parts in the embodiments related to FIG. 2b, which are not repeated herein.

In some embodiments, the first network function receives the first information sent by the third network function, but is not limited thereto; it may also receive first information sent by other entities.

In some embodiments, the first network function obtains the first information specified by the protocol.

In some embodiments, the first network function obtains the first information from the upper layer(s).

In some embodiments, the first network function performs processing to obtain the first information.

In some embodiments, step S3201 is omitted, the first network function autonomously implements the function indicated by the first information, or the aforementioned function is default.

In step S3202, the network slice admission control is performed for the first terminal.

In some embodiments, for optional implementation manners of step S3202, reference may be made to the optional implementation manner of step S2203 in FIG. 2b and other relevant parts in the embodiments related to FIG. 2b, which are not repeated herein.

In step S3203, second information is sent to a second network function.

In some embodiments, for optional implementation manners of step S3203, reference may be made to the optional implementation manner of step S2204 in FIG. 2b and other relevant parts in the embodiments related to FIG. 2b, which are not repeated herein.

In step S3204, third information is obtained.

In some embodiments, for optional implementation manners of step S3204, reference may be made to the optional implementation manner of step S2206 in FIG. 2b and other relevant parts in the embodiments related to FIG.2b, which are not repeated herein.

In some embodiments, the first network function receives third information sent by the second network function, but is not limited thereto; it may also receive third information sent by other entities.

In some embodiments, the first network function obtains the first information specified by the protocol.

In some embodiments, the first network function obtains the third information from the upper layer(s).

In some embodiments, the first network function performs processing to obtain the third information.

In some embodiments, step S3204 is omitted, the first network function autonomously implements the function indicated by the third information, or the aforementioned function is default.

In step S3205, an updated first threshold is determined.

In some embodiments, for optional implementation manners of step S3205, reference may be made to the optional implementation manner of step S2206 in FIG. 2b and other relevant parts in the embodiments related to FIG. 2b, which are not repeated herein.

In step S3206, the network slice admission control is performed for the first terminal.

In some embodiments, for optional implementation manners of step S3207, reference may be made to the optional implementation manner of step S2207 in FIG. 2b and other relevant parts in the embodiments related to FIG. 2b, which are not repeated herein.

In step S3207, fifth information is sent to the third network function.

In some embodiments, for optional implementation manners of step S3207, reference may be made to the optional implementation manner of step S2208 in FIG. 2b and other relevant parts in the embodiments related to FIG. 2b, which are not repeated herein.

The information transmission method involved in the embodiments of the present disclosure may include at least one of steps S3201 to S3208. For example, step S3201 may be implemented as a separate embodiment, step S3202 may be implemented as a separate embodiment, step S3203 may be implemented as a separate embodiment, step S3204 may be implemented as a separate embodiment, step S3205 may be implemented as a separate embodiment, step S3206 may be implemented as a separate embodiment, step S3207 may be implemented as a separate embodiment, and step S3208 may be implemented as a separate embodiment.

For example, steps S3201 to S3207 may be implemented as a separate embodiment, but it is not limited thereto.

In some embodiments, step S3207 is optional, and one or more of these steps may be omitted or substituted in different embodiments.

FIG. 3c is a schematic flowchart of an information transmission method according to an embodiment of the present disclosure. As shown in FIG. 3c, the information transmission method involved in the embodiment of the present disclosure is executed by the first network function 1031, and the method includes the following steps.

In step S3301, first information is obtained.

In some embodiments, for optional implementation manners of step S3301, reference may be made to the optional implementation manner of step S2302 in FIG. 2c and other relevant parts in the embodiments related to FIG. 2c, which are not repeated herein.

In some embodiments, the first network function receives the first information sent by the third network function, but is not limited thereto; it may also receive first information sent by other entities.

In some embodiments, the first network function obtains the first information specified by the protocol.

In some embodiments, the first network function obtains the first information from the upper layer(s).

In some embodiments, the first network function performs processing to obtain the first information.

In some embodiments, step S3301 is omitted, the first network function autonomously implements the function indicated by the first information, or the aforementioned function is default.

In step S3302, admission control of the network slice is performed for the first terminal.

In some embodiments, for optional implementation manners of step S3302, reference may be made to the optional implementation manner of step S2303 in FIG. 2c and other relevant parts in the embodiments related to FIG. 2c, which are not repeated herein.

In step S3303, second information is sent to the second network function.

In some embodiments, for optional implementation manners of step S3303, reference may be made to the optional implementation manner of step S2304 in FIG. 2c and other relevant parts in the embodiments related to FIG. 2c, which are not repeated herein.

In step S3304, fourth information is obtained.

In some embodiments, for optional implementation manners of step S3304, reference may be made to the optional implementation manner of step S2306 in FIG. 2c and other relevant parts in the embodiments related to FIG. 2c, which are not repeated herein.

In step S3305, fifth information is sent to the third network function.

In some embodiments, for optional implementation manners of step S3305, reference may be made to the optional implementation manner of step S2307 in FIG. 2c and other relevant parts in the embodiments related to FIG. 2c, which are not repeated herein.

The information transmission method involved in the embodiments of the present disclosure may include at least one of steps S3301 to S3308. For example, step S3301 may be implemented as a separate embodiment, step S3302 may be implemented as a separate embodiment, step S3303 may be implemented as a separate embodiment, step S3304 may be implemented as a separate embodiment, step S3305 may be implemented as a separate embodiment, step S3306 may be implemented as a separate embodiment, and step S3307 may be implemented as a separate embodiment.

For example, steps S3301 to S3304 may be implemented as a separate embodiment, but it is not limited thereto.

In some embodiments, step S3305 is optional, and one or more of these steps may be omitted or substituted in different embodiments.

FIG. 4a is a schematic flowchart of an information transmission method shown according to an embodiment of the present disclosure. As shown in FIG. 4a, the embodiment of the present disclosure relates to an information transmission method, performed by a first network function 1032, the method including the following steps.

In step S4101, second information is obtained.

In some embodiments, for an optional implementation of step S4101, reference may be made to the optional implementation of step S2204 in FIG. 2b and other related parts in the embodiments involved in FIG. 2b, and details are not described herein again.

In some embodiments, the second network function receives the second information sent by the first network function, but is not limited thereto, and may also receive second information sent by other entities.

In some embodiments, the second network function obtains the second information specified by a protocol.

In some embodiments, the second network function obtains the second information from the upper layer(s).

In some embodiments, the second network function performs processing to obtain the second information.

In some embodiments, step S4101 is omitted, and the first network function autonomously implements the functions indicated by the first information, or the above functions are default or preset.

In step S4102, an updated first threshold is determined.

In some embodiments, for an optional implementation of step S4102, reference may be made to the optional implementation of step S2205 in FIG. 2b and other related parts in the embodiments involved in FIG. 2b, and details are not described herein again.

In step S4103, third information is sent.

In some embodiments, for an optional implementation of step S4103, reference may be made to the optional implementation of step S2206 in FIG. 2b and other related parts in the embodiments involved in FIG. 2b, and details are not described herein again.

The information transmission method involved in the embodiments of the present disclosure may include at least one of steps S4101 to S4103. For example, step S4101 may be implemented as an independent embodiment, step S4102 may be implemented as an independent embodiment, and step S4103 may be implemented as an independent embodiment.

For example, step S4102 to step S4103 may be implemented as an independent embodiment, but are not limited thereto.

In some embodiments, step S4101 is optional, and one or more of these steps may be omitted or replaced in different embodiments.

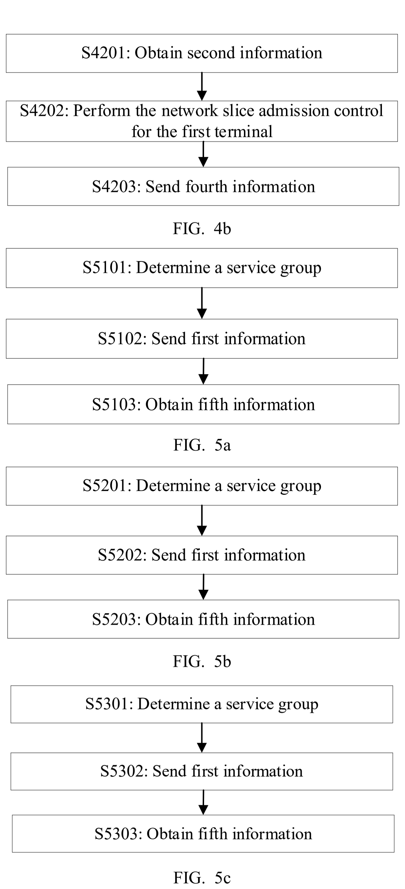

FIG. 4b is a schematic flowchart of an information transmission method shown according to an embodiment of the present disclosure. As shown in FIG. 4b, the embodiment of the present disclosure relates to an information transmission method, performed by a first network function 1032, the method including the following steps.

In step S4201, second information is obtained.

In some embodiments, for an optional implementation of step S4201, reference may be made to the optional implementation of step S2304 in FIG. 2c and other related parts in the embodiments involved in FIG. 2c, and details are not described herein again.

In some embodiments, the second network function receives the second information sent by the first network function, but is not limited thereto, and may also receive the second information sent by other entities.

In some embodiments, the second network function obtains the second information specified by a protocol.

In some embodiments, the second network function obtains the second information from the upper layer(s).

In some embodiments, the second network function performs processing to obtain the second information.

In some embodiments, step S4201 is omitted, and the first network function autonomously implements the functions indicated by the first information, or the above functions are default or preset.

In step S4202, the network slice admission control is performed for the first terminal.

In some embodiments, for an optional implementation of step S4202, reference may be made to the optional implementation of step S2305 in FIG. 2c and other related parts in the embodiments involved in FIG. 2c, and details are not described herein again.

In step S4203, fourth information is sent.

In some embodiments, for an optional implementation of step S4203, reference may be made to the optional implementation of step S2306 in FIG. 2c and other related parts in the embodiments involved in FIG. 2c, and details are not described herein again.

The information transmission method involved in the embodiments of the present disclosure may include at least one of steps S4201 to S4203. For example, step S4201 may be implemented as an independent embodiment, step S4202 may be implemented as an independent embodiment, and step S4203 may be implemented as an independent embodiment.

For example, step S4202 to step S4203 may be implemented as an independent embodiment, but are not limited thereto.

In some embodiments, step S4201 is optional, and one or more of these steps may be omitted or replaced in different embodiments.

FIG. 5a is a schematic interaction diagram of an information transmission method shown according to an embodiment of the present disclosure. As shown in FIG. 5a, the embodiment of the present disclosure relates to an information transmission method performed by a third network function 103, the method including one of the following steps.

In step S5101, a service group is determined.

In some embodiments, for an optional implementation of step S5101, reference may be made to the optional implementation of step S2101 in FIG. 2a and other related parts in the embodiments involved in FIG. 2a, and details are not described herein again.

In some embodiments, step S5101 is omitted. The third network function receives a service group identifier of the first terminal.

In step S5102, first information is sent.

In some embodiments, for an optional implementation of step S5102, reference may be made to the optional implementation of step S2102 in FIG. 2a and other related parts in the embodiments involved in FIG. 2a, and details are not described herein again.

In step S5103, fifth information is obtained.

In some embodiments, for an optional implementation of step S5103, reference may be made to the optional implementation of step S2104 in FIG. 2a and other related parts in the embodiments involved in FIG. 2a, and details are not described herein again.

In some embodiments, the third network function receives the fifth information sent by the first network function, but is not limited thereto, and may also receive the fifth information sent by other entities.

In some embodiments, the third network function obtains the fifth information specified by a protocol.

In some embodiments, the third network function obtains the fifth information from the upper layer(s).

In some embodiments, the third network function performs processing to obtain the fifth information.

In some embodiments, step S5103 is omitted, and the third network function autonomously implements the functions indicated by the first information, or the above functions are default or preset.

The information transmission method involved in the embodiments of the present disclosure may include at least one of step S5101 to step S5103. For example, step S5101 may be implemented as an independent embodiment, step S5102 may be implemented as an independent embodiment, and step S5103 may be implemented as an independent embodiment.

For example, step S5102 to step S5103 may be implemented as an independent embodiment, but are not limited thereto.

In some embodiments, step S5101 is optional, and one or more of these steps may be omitted or replaced in different embodiments.

FIG. 5b is a schematic interaction diagram of an information transmission method shown according to an embodiment of the present disclosure. As shown in FIG. 5b, the embodiment of the present disclosure relates to an information transmission method performed by a third network function 103, the method including one of the following steps.

In step S5201, a service group is determined.

In some embodiments, for an optional implementation of step S2101, reference may be made to the optional implementation of step S2201 in FIG. 2b and other related parts in the embodiments involved in FIG. 2b, and details are not described herein again.

In some embodiments, step S5201 is omitted. The third network function receives a service group identifier of the first terminal.

In step S5202, first information is sent.

In some embodiments, for an optional implementation of step S5202, reference may be made to the optional implementation of step S2202 in FIG. 2b and other related parts in the embodiments involved in FIG. 2b, and details are not described herein again.

In step S5203, fifth information is obtained.

In some embodiments, for an optional implementation of step S5203, reference may be made to the optional implementation of step S2208 in FIG. 2b and other related parts in the embodiments involved in FIG. 2b, and details are not described herein again.

In some embodiments, the third network function receives the fifth information sent by the first network function, but is not limited thereto, and may also receive the fifth information sent by other entities.

In some embodiments, the third network function obtains the fifth information specified by a protocol.

In some embodiments, the third network function obtains the fifth information from the upper layer(s).

In some embodiments, the third network function performs processing to obtain the fifth information.

In some embodiments, step S5203 is omitted, and the third network function autonomously implements the functions indicated by the first information, or the above functions are default or preset.

The information transmission method involved in the embodiments of the present disclosure may include at least one of step S5201 to step S5203. For example, step S5201 may be implemented as an independent embodiment, step S5202 may be implemented as an independent embodiment, and step S5203 may be implemented as an independent embodiment.

For example, step S5202 to step S5203 may be implemented as an independent embodiment, but are not limited thereto.

In some embodiments, step S5201 is optional, and one or more of these steps may be omitted or replaced in different embodiments.

FIG. 5c is a schematic interaction diagram of an information transmission method shown according to an embodiment of the present disclosure. As shown in FIG. 5c, the embodiment of the present disclosure relates to an information transmission method performed by a third network function 103, the method including one of the following steps.

In step S5301, a service group is determined.

In some embodiments, for an optional implementation of step S5301, reference may be made to the optional implementation of step S2301 in FIG. 2c and other related parts in the embodiments involved in FIG. 2c, and details are not described herein again.

In some embodiments, step S5301 is omitted. The third network function receives a service group identifier of the first terminal.

In step S5302, first information is sent.

In some embodiments, for an optional implementation of step S5302, reference may be made to the optional implementation of step S2302 in FIG. 2c and other related parts in the embodiments involved in FIG. 2c, and details are not described herein again.

In step S5303, fifth information is obtained.

In some embodiments, for an optional implementation of step S5303, reference may be made to the optional implementation of step S2307 in FIG. 2c and other related parts in the embodiments involved in FIG. 2c, and details are not described herein again.

In some embodiments, the third network function receives the fifth information sent by the first network function, but is not limited thereto, and may also receive the fifth information sent by other entities.

In some embodiments, the third network function obtains the fifth information specified by a protocol.

In some embodiments, the third network function obtains the fifth information from the upper layer(s).

In some embodiments, the third network function performs processing to obtain the fifth information.

In some embodiments, step S5303 is omitted, and the third network function autonomously implements the functions indicated by the first information, or the above functions are default or preset.

The information transmission method involved in the embodiments of the present disclosure may include at least one of step S5301 to step S5303. For example, step S5301 may be implemented as an independent embodiment, step S5302 may be implemented as an independent embodiment, and step S5303 may be implemented as an independent embodiment.

For example, step S5302 to step S5303 may be implemented as an independent embodiment, but it is not limited thereto.

In some embodiments, step S5301 is optional, and one or more of these steps may be omitted or replaced in different embodiments.

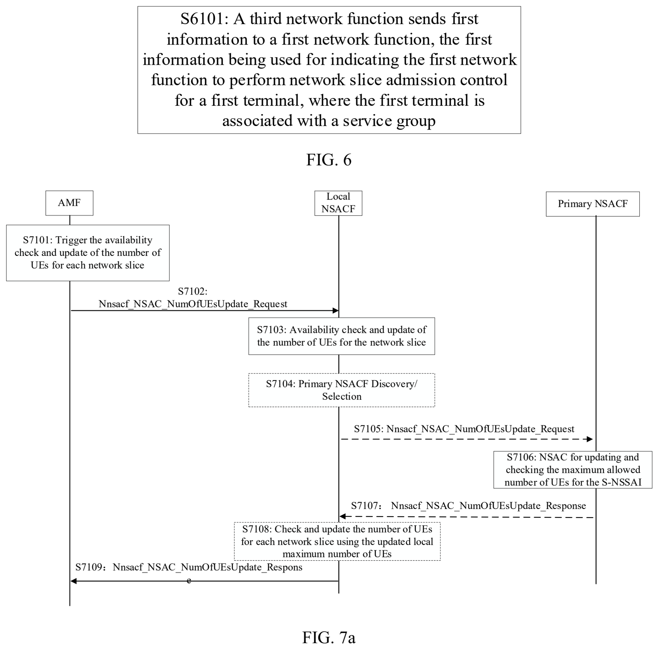

FIG. 6 is a schematic interaction diagram of an information transmission method shown according to an embodiment of the present disclosure. As shown in FIG. 6, the embodiment of the present disclosure relates to an information transmission method for a communication system 100, the method including one of the following steps.

In step S6101, a third network function sends first information to a first network function, the first information being used for indicating the first network function to perform network slice admission control for a first terminal, where the first terminal is associated with a service group.

For an optional implementation of step S6101, reference may be made to step S2101 in FIG. 2a, step S2201 in FIG. 2b, step S2301 in FIG. 2c, step S3101 in FIG. 3a, step S3201 in FIG. 3b, step S3301 in FIG. 3c, step S5101 in FIG. 5a, step S5201 in FIG. 5b, and step S5301 in FIG. 5c, as well as other related parts in the embodiments involved in FIG. 2a to FIG. 5c, and details are not described herein again.

In some embodiments, the above method may include methods of the embodiments of the first network function, the second network function, the third network function, etc., which will not be repeated here.

A plurality of specific examples are provided below in combination with any of the above embodiments.

In this example, an XR group admission control scheme in a hierarchical NSACF architecture is provided, and a procedure involves an AMF (third network function), a local NSACF (first network function), a primary NSACF (second network function), and a UE (i.e., terminal). It mainly focuses on access admission management of UEs belonging to a group (i.e., service group) by the local NSACF and the primary NSACF. The local NSACF performs NSAC when local NSAC conditions are met; otherwise, the primary NSACF is requested to perform NSAC.

The local NSACF performs admission control on the number of registered users in a corresponding area. For a UE that exceeds a quota or a threshold, or a UE (XR service group user) associated with an XR group identifier (Group ID) (i.e., an identifier of a service group) such as in a handover, the local NSACF sends a request to the primary NSACF to perform admission control on registered users. Further, the primary NSACF may locally perform NSAC for the UE, or deliver a new authorized threshold or quota to the local NSACF for performing NSAC for the UE.

Specifically:
AMF: The AMF sends a UE number update request message to the NSACF, where the message includes a terminal identifier (UE ID), an access type of an authorized NSSAI, related slice S-NSSAIs for which NSAC is requested to be performed, an AMF identifier, and an update flag. The AMF further includes a group identifier in the request message to the NSACF, where the group identifier is used to identify an XR service group or an application group to which the UE belongs. The group identifier may be an internal group identifier or a standardized general group identifier. Further, the AMF determines the group identifier. The AMF may determine the group identifier according to local configuration, OAM configuration, UDM subscription information, XR multi-modal service capability sent by the UE/group information related to UE PEI, or group information in a UE context sent by another AMF, and the like.

Local NSACF and primary NSACF:

The local NSACF performs an update of the number of registered UEs of the slice by considering the group identifier. When a local threshold is not reached, the local NSACF locally performs admission control for a UE associated with the group identifier; when the local threshold is reached or exceeded, the local NSACF requests the primary NSACF to perform admission control for the UE associated with the group identifier.

Further, if the local NSACF is locally configured with a group threshold or a group quota, group validity check is locally performed (when the group threshold or the group quota is not reached, a registration request of the UE associated with the group identifier is accepted; otherwise, the request is rejected or a non-group UE NSAC procedure is performed for the UE).

If the NSACF is configured with a group threshold or a group quota, and a maximum group threshold or quota in the slice is not reached, then: (1. if the group identifier is already in a registration list, a new entry is added to the group identifier, and a number of registered groups remains unchanged; 2. if the group identifier is not in the registration list, the group identifier is added to the registration list, and the number of registered groups increases.) Further, the registration request of the UE is accepted, the UE is added to the registration list, and the number of registered UEs of the slice increases.

Furthermore, (without configuring a group threshold), when a hierarchical NSAC architecture is in a threshold mode or a quota mode, the validity check of the UE is performed respectively in the following manners.

Quota-based control: if it is a request to increase the number of UEs, and the local maximum number of allowed registered UEs has been reached, the local NSACF sends a request to the primary NSACF to request NSAC for the UE, (including) an XR common ID/group identifier of the UE. The primary NSACF carries an updated quota in a response message to the local NSACF, for the local NSACF to perform NSAC for the UE associated with the group identifier. Alternatively, the primary NSACF locally performs NSAC for the UE associated with the group identifier (accepting or rejecting a registration admission request of the UE based on an NSAC policy of the primary NSACF).

Threshold-based control: The local NSACF is initially configured with a maximum number of locally allowed registered UEs and a threshold. If an increase user number request/registration request and a group identifier of a UE are received, the group identifier has been stored or registered (or an associated UE in the group identifier has been registered and accepted), and the threshold has been reached but a configured allowed maximum value has not been exceeded, the local NSACF accepts the registration request of the UE associated with the group identifier. If the group identifier has been stored or registered (or an associated UE in the group identifier has been registered and accepted), the threshold has been reached, and the configured allowed maximum value has been reached, the local NSACF sends a request to the primary NSACF to perform NSAC. The primary NSACF carries an updated quota in a response message to the local NSACF, for the local NSACF to perform NSAC for the UE associated with the group identifier. Alternatively, the primary NSACF locally performs NSAC for the UE associated with the group identifier (accepting or rejecting the registration admission request of the UE based on the NSAC policy of the primary NSACF).

If the update flag is decreased (UE de-registration request), the number of registered UEs is correspondingly decreased, and if the UE is a last UE in the group, the group identifier is deleted from a group list.

Optionally, if UEs in the group identifier access via different access types, an NSAC policy of the group is performed according to a maximum number of registered UEs of a corresponding access type.

Optionally, if the UE of the group identifier supports service continuity, NSAC for the UE is performed in combination with the service continuity and the group NSAC policy.

Optionally, the UE associated with the group identifier may be a 3GPP terminal, or a non-3GPP terminal, or a non-3GPP terminal device associated with a 3GPP UE terminal.

### Example 1:

Validity check and update procedure of the number of registered users of a slice under a hierarchical NSACF architecture.

As shown in FIG. 7a, for a Single Network Slice Selection Assistance Information (S-NSSAI) (i.e., network slice) for which a value of registered UEs is to be counted, if a hierarchical NSACF architecture is deployed in a network, the following enforcement applying to the maximum number of UEs registered for S-NSAI is as follows.

In step S7101, if the AMF does not know a peer NSACF, the AMF performs NSACF discovery and selection. When a certain network slice S-NSSAI needs to perform NSAC, and the slice identifier is in the Allowed NSSAI (e.g., the AMF requests the UE to register to the slice) or deleted from the Allowed NSSAI (the AMF requests the UE to de-register from the slice), the AMF triggers the network slice validity check and update procedure to update the number of registered terminal users. The trigger events of the procedure further include the change of Allowed NSSAI caused by handover across AMFs. This procedure is triggered under the following scenarios.
- In the registration procedure of a terminal, including registration of an initial registration type or a mobility registration update type caused by handover across AMFs, NSAC is performed before or after the registration accept message depending on whether the Early Activity Control (EAC) mode is enabled (e.g., in the EAC active state, the NSAC procedure is performed before the registration accept message; when EAC is not active, the NSAC procedure is performed after the registration accept message).
- In the de-registration procedure, after the de-registration procedure ends, the NSAC procedure is performed to subtract the UE from the statistics.
- In the configuration update procedure of a terminal, for example, if a configuration update is triggered by an NSSAA slice-specific authentication and authorization procedure or a subscription S-NSSAI change procedure, NSAC is performed before or after the configuration update message according to the EAC mode (e.g., if the EAC mode is active and the update flag is an increase in number, NSAC is performed before the UE configuration update message; if the EAC mode is active but the update flag is a decrease in number, or if the EAC mode is not active, NSAC is performed after the UE configuration update message).

In step S7102, the AMF sends an Nnsacf_NSAC_NumOfUEsUpdate_Request message to the NSACF. The AMF includes the terminal identifier (UE ID), the access type of the authorized NSSAI, the relevant S-NSSAIs requesting NSAC execution, the AMF identifier, and an update flag in the message. The update flag indicates whether the value of registered users UE increases or decreases, for example, performing an increase when a user registers to the slice, and performing a decrease when the UE de-registers from the slice or registration cannot continue. If the UE is already registered, the AMF also carries a UE-already-registered indication.

If the UE belongs to a certain XR group, the AMF also includes a group identifier in the request message to the NSACF, which is used to identify the XR service group or application group to which the UE belongs. The group identifier may be an internal group identifier or a standardized general group identifier.

Further, the AMF determines whether the UE belongs to an XR group and the group ID. The AMF may determine the corresponding group identifier based on local configuration, OAM configuration, UDM subscription information, XR multi-modal service capability/UE PEI-related group information sent by the UE, XR multi-modal service capability sent by the RAN, or group information in the UE context sent by other AMFs, etc.

If this is the first interaction between the AMF and the NSACF for the slice to perform the NSAC procedure, the AMF will carry information of relevant endpoint NFs that need to be notified by EAC in the message, thereby implicitly subscribing to EAC-related notifications of the slice from the NSACF.

If the registered S-NSSAI has been previously registered in another service area, the AMF may provide an indication that the UE is already registered to the NSACF. The AMF determines the indication based on Allowed NSSAI information received from a source AMF (in the case of handover between AMFs) or from an SMF+PGW-C (in the case of mobility from EPS to 5GS).

In step S7103, the local NSACF performs NSAC for the indicated network slice (S-NSSAI).

The local NSACF performs the update of the number of UEs registered in the slice considering the group identifier. When the local threshold is not reached, the local NSACF locally performs admission control for the UE associated with the group identifier; when the local threshold is reached or exceeded, the local NSACF requests the primary NSACF to perform admission control for the UE associated with the group identifier.

Optionally, when the AMF does not send the group identifier/service group, the local NSACF may determine the group identifier/service group associated with the UE according to local configuration/OAM configuration/group identifier sent by the PCF/identifier sent by the NEF.

Further, if a group threshold or quota is locally configured in the local NSACF, group validity check is performed locally (when the group threshold or quota is not reached, the registration request of the UE associated with the group identifier is accepted, otherwise it is rejected or the UE performs a non-group UE NSAC procedure).

If the NSACF is configured with a group threshold or quota, and the maximum group threshold or quota in the slice is not reached, then: (1. If the group identifier is already in the registered list, a new entry is added to the group identifier, and the number of registered groups remains unchanged; 2. If the group identifier is not in the registered list, the group identifier is added to the registered list, and the number of registered groups increases.) Further, the registration request of the UE is accepted, the UE is added to the registered list, and the number of registered UEs for the slice increases.

If the update flag is decreased (UE de-registration application), the number of registered UEs is correspondingly decreased. If the UE is the last UE in the group, the group identifier is deleted from the group list.

Optionally, if UEs in the group identifier access through different access types, the NSAC policy of the group is executed according to the maximum number of terminals registered for the corresponding access type.

Optionally, if the UE of the group identifier supports service continuity, the NSAC of the UE is performed by combining service continuity and the group NSAC policy.

If the update flag parameter of the AMF indicates an increase, the following applies:
(In this embodiment, group UEs may be executed by the local NSACF. After the quota of the local NSACF is reached, it may be executed by the primary NSACF on its behalf, or the quota of the local NSACF is updated and executed by the local NSACF;)

If the number of UEs does not reach the local maximum value (quota, threshold, etc.), the local NSACF performs the following processing (step S7103a), and steps S7104-S7108 are ignored.

In step S7103a, the NSACF determines whether the Access Type provided by the AMF is configured with the NSAC function. If it is not configured, the NSACF accepts the request and does not make changes to the number of UEs. If the NSACF function is configured, the NSACF performs the update of the number of UEs registered to the slice. For example, based on the information provided by the AMF in the update flag parameter, the number of registered UEs in the corresponding network slice is increased or decreased.

Quota-based control: if it is a request to increase the number of UEs, and the local maximum number of allowed registered UEs has been reached, the local NSACF sends a request to the primary NSACF to request NSAC for the UE, (including) an XR common ID/group identifier of the UE. The primary NSACF carries an updated quota in a response message to the local NSACF, for the local NSACF to perform NSAC for the UE associated with the group identifier. Alternatively, the primary NSACF locally performs NSAC for the UE associated with the group identifier (accepting or rejecting a registration admission request of the UE based on an NSAC policy of the primary NSACF).

Threshold-based control: The local NSACF is initially configured with a maximum number of locally allowed registered UEs and a threshold. If an increase user number request/registration request and a group identifier of a UE are received, the group identifier has been stored or registered (or an associated UE in the group identifier has been registered and accepted), and the threshold has been reached but a configured allowed maximum value has not been exceeded, the local NSACF accepts the registration request of the UE associated with the group identifier. If the group identifier has been stored or registered (or an associated UE in the group identifier has been registered and accepted), the threshold has been reached, and the configured allowed maximum value has been reached, the local NSACF sends a request to the primary NSACF to perform NSAC. The primary NSACF carries an updated quota in a response message to the local NSACF, for the local NSACF to perform NSAC for the UE associated with the group identifier. Alternatively, the primary NSACF locally performs NSAC for the UE associated with the group identifier (accepting or rejecting the registration admission request of the UE based on the NSAC policy of the primary NSACF).

If an EAC notification endpoint is received from the AMF, the NSACF stores the EAC notification endpoint associated with the S-NSSAI to facilitate subsequent use of the stored notification endpoint to update the EAC mode.

If the number of UEs reaches the local maximum value (quota, threshold, etc.), the local NSACF sends an authorization request to the primary NSACF, and steps S7104-S7109 are executed (when the local NSACF quota is reached, a request is directly sent to the primary NSACF to be responsible for admission control processing).

For NSACFs that support UE admission threshold-based control (The present disclosure involves the processing of two modes, quota-based and threshold-based. The difference lies in: for the processing of the threshold-based control mode, the threshold can be updated, but the maximum number of UEs initially configured to the local NSACF will not be updated. In the aforementioned quota mode, the quota can be updated by the Primary NSACF):
If the local threshold is not reached, or is reached but the local maximum value has not been reached and the UE group already has members registered to the network, then step S7103a is executed, and step S7104 to step S7108 are skipped.
- If the local maximum number has been reached, and the UE group already has members registered to the network, then the local NSACF sends a request to the primary NSACF requesting the group-based NSAC for the UE. Step S7104 to step S7109 are executed.

In step S7104, if the primary NSACF has not been discovered before, the local NSACF discovers and selects the primary NSACF.

In step S7105, the local NSACF invokes Nnscf_NSAC_NumOfUEsUpdate_Request to the primary NSACF. The request includes the NSAC request information received from the AMF, which may include the XRM group identifier of the UE.

Optionally, when the AMF does not send the group identifier/service group, the local NSACF and/or the primary NSACF may determine the group identifier/service group associated with the UE based on the local configuration/OAM configuration/group identifier sent by PCF/identifier sent by NEF.

In step S7106, the primary NSACF performs NSAC on the indicated S-NSSAI.

If the update flag parameter from the local NSACF indicates an increase (UE registration), the following applies.

If the primary NSACF decides to delegate the NSAC update request to the local NSACF (to be processed by the local NSACF), the primary NSACF adjusts the local maximum number used for UE quotas or the UE admission threshold used for UE admission thresholds in its response to the local NSACF, depending on the UE admission type.

When the primary NSACF performs UE quota admission control, it considers the group identifier to perform admission for UEs within that group. (For example, UEs not associated with the group identifier are rejected, or UEs not associated with the group identifier that have already registered on other NFs are rejected.) The primary NSACF responds to the local NSACF using step S7107.

When the primary NSACF performs threshold admission control, the steps executed are similar to those in step S7103a (the executor is the primary NSACF).

In step S7107, the primary NSACF returns an Nnscf_NSAC_NumOfUEsUpdate_Response message to the NSACF. The response may include an indication (e.g., rejection).

If the primary NSACF determines to adjust the configuration values (quotas, thresholds, etc.) stored in the NSACF, the updated information is also included in the response.

In step S7108, NSACF checks the response from the primary NSACF. If the response includes updated configuration values, NSACF updates its local data based on the received update information and executes step S7103a. If there is no update information in the response message, a message is returned to the AMF based on the response from the primary NSACF.

In step S7109, the NSACF returns the Nnsacf_NSAC_NumOfUEsUpdate_Response response message to the AMF, carrying the slice identifier S-NSSAI(s) and a result indication in the message, where the indication indicates whether the maximum number of registered users for the slice has been reached. Optionally, the result indication carries (an indication) indicating whether the slice has reached the maximum number of registered Groups.

In the UE registration procedure, if only some slices have reached the maximum number of registered users, the AMF sends a registration accept message to the registering UE. In the message, the slice identifiers rejected due to NSAC are carried in the rejected slice list, and the corresponding rejection cause is set to the maximum number of users in the area of the slice having been reached. Optionally, a timer for initiating a re-request is set.

When all requested S-NSSAI(s) in the request message sent by the AMF to the NSACF have reached the allowed maximum value, and if one or more subscribed slices in the subscription information are marked as default slices and simultaneously do not require NSAC execution, the AMF may decide to put these default slices into the allowed NSSAI as authorized allowed slices. Otherwise, the AMF will reject the user UE's registration request. In the registration reject message, the AMF carries the list of rejected slice identifiers, with each slice carrying the corresponding rejection cause value, for example, the allowed maximum number of registered users in the area of the slice has been reached. Meanwhile, optionally, a timer for initiating a re-request is set.

If the group threshold or quota is reached, the rejection cause indicates that the maximum group threshold or quota has been reached.

### Example 2: Validity check and update procedure for the number of registered users in a slice (registration scenario)

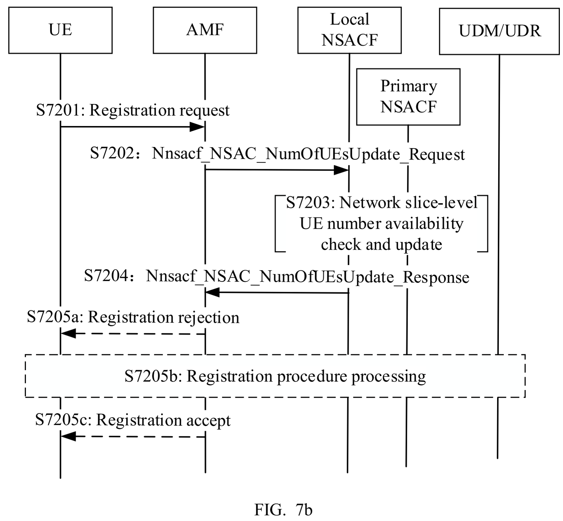

FIG. 7b: Validity check and update procedure for the number of registered users in a slice (registration scenario)

In step S7201, in the UE registration procedure, the user initiates a registration procedure to a certain network slice or slices towards the network. The AMF performs NSACF discovery and selection based on parameters such as slice identifier and NSACF characteristics. As described in step S7101 of the embodiment 2.2.1 in FIG. 7a, the validity check and update procedure for the network slice for the registering UE is triggered.

Steps S7204-S7204 refer to the description of steps S7102-S7109 in the embodiment of FIG. 7a.

Step S7205a. If all slices requested to perform NSAC have reached the maximum value (reached the maximum value within the PLMN or service area, and no new threshold can be updated or supplemented within the slice or the registration area of the slice), and according to AMF configuration and other policy information, such as there being no other authorized default slices, and no slices in the procedure of performing NSSAI slice-specific authentication and authorization procedures, then the AMF will reject the registration of the UE to the relevant network slices, sending a registration reject message while carrying relevant rejection cause values, such as threshold reached, etc.

Step S7205b. Otherwise, perform according to the existing registration procedure mechanism.

Step S7205c. If the normal registration procedure was performed as in FIG. 5b, and a registration accept message is sent, the AMF sends the message to the UE, which carries the rejected slice identifier and the corresponding cause value, and optionally carries a backoff timer.

Example 3: Validity check and update procedure for the number of registered users in a slice (registration scenario)

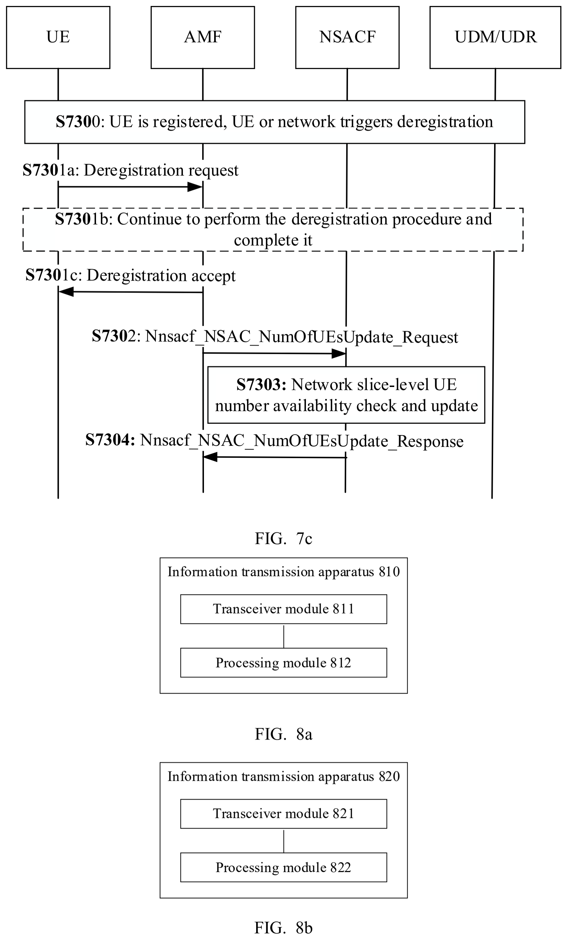

FIG. 7c: Validity check and update procedure for the number of registered users in a slice (registration scenario)

Step S7300. The terminal user (UE) is already registered, and the UE or network triggers the deregistration procedure.

Steps S7301a-S7301c. The deregistration procedure is completed according to the normal deregistration procedure. The AMF triggers the validity check and update procedure for the number of registered users for the slice.

Steps S7302-S7304: After the deregistration procedure is completed, the AMF triggers the validity check and update procedure for the number of registered users for the slice, for example, the NSACF subtracts the number of UEs from the statistics in the PLMN or service area of each corresponding slice, and deletes the UE ID from the registered user number list of the corresponding slice. Specifically, refer to steps S7102-S7109 in FIG. 7a for details on executing the validity check and update procedure.

An embodiment of the present disclosure further provides an apparatus for implementing any one of the above methods. For example, an apparatus is provided, which includes units for implementing each step performed by a terminal in any one of the above methods. For another example, another apparatus is also provided, which includes units for implementing each step performed by a network device (such as an access network device, or a core network device, etc.) in any one of the above methods.

It should be understood that the division of each unit in the above apparatus is merely a division of logical functions. In actual implementation, all or part of the units may be integrated into a single physical entity, or they may be physically separated. In addition, the units in the apparatus may be implemented in the form of a processor invoking software. For example, the apparatus includes a processor, which is connected to a memory, the memory stores computer instructions, and the processor invokes the computer instructions stored in the memory to implement any one of the above methods or the functions of each unit of the above apparatus. The processor is, for example, a general-purpose processor such as a central processing unit (CPU) or a microprocessor, and the memory is a memory inside the apparatus or a memory outside the apparatus. Alternatively, the units in the apparatus may be implemented in the form of hardware circuits, and the functions of some or all units may be realized through the design of hardware circuits. The above hardware circuits may be understood as one or more processors. For example, in one implementation, the above hardware circuit is an application-specific integrated circuit (ASIC), and the functions of some or all of the above units are realized through the design of the logical relationships of components in the circuit. For another example, in another implementation, the above hardware circuit may be implemented by a programmable logic device (PLD). Taking a field programmable gate array (FPGA) as an example, it may include a large number of logic gate circuits, and the connection relationships between the logic gate circuits are configured through configuration files, thereby realizing the functions of some or all of the above units. All units of the above apparatus may be entirely implemented in the form of the processor invoking software, or entirely in the form of hardware circuits, or part of the units in the form of the processor invoking software and the remaining part in the form of hardware circuits.

In the embodiments of the present disclosure, a processor is a type of circuit with signal processing capability. In one implementation, the processor may be a circuit capable of reading and executing instructions, such as a central processing unit (CPU), a microprocessor, a graphics processing unit (GPU) (which can be understood as a type of microprocessor), or a digital signal processor (DSP), etc. In another implementation, the processor may realize certain functions through the logical relationships of a hardware circuit, where the logical relationships of the aforementioned hardware circuit are either fixed or reconfigurable. For example, the processor is a hardware circuit implemented by an application-specific integrated circuit (ASIC) or a programmable logic device (PLD), such as a field-programmable gate array (FPGA). In a reconfigurable hardware circuit, the process in which the processor loads a configuration file to realize the configuration of the hardware circuit can be understood as the process in which the processor loads instructions to realize the functions of some or all of the aforementioned units. In addition, the processor may also be a hardware circuit designed for artificial intelligence, which can be understood as a type of ASIC, such as a neural network processing unit (NPU), a tensor processing unit (TPU), or a deep learning processing unit (DPU), etc.

FIG. 8a is a schematic structural diagram of an information transmission apparatus provided by an embodiment of the present disclosure. As shown in FIG. 8a, the information transmission apparatus 810 includes: a transceiver module 811, configured to receive first information sent by a third network function, where the first information is used to indicate the first network function to perform admission control of a network slice for a first terminal, and the first terminal is associated with a service group. Optionally, the transceiver module 811 is configured to execute the steps related to information transmission and reception performed by the first network function in any of the above information transmission methods. Optionally, the information transmission apparatus 810 further includes a processing module 812, which is configured to execute the steps related to determination and processing performed by the first network function in any of the above methods, and details are not repeated herein.

FIG. 8b is a schematic structural diagram of an information transmission apparatus provided by an embodiment of the present disclosure. As shown in FIG. 8b, the information transmission apparatus 820 includes: a transceiver module 821, configured to receive first information sent by the third network function, where the first information is used to indicate the first network function to perform admission control of a network slice for the first terminal, and the first terminal is associated with a service group. Optionally, the transceiver module 821 is configured to execute the steps related to information transmission and reception performed by the second network function in any of the above information transmission methods. Optionally, the information transmission apparatus 820 further includes a processing module 822, which is configured to execute the steps related to determination and processing performed by the first network function in any of the above methods, and details are not repeated herein.

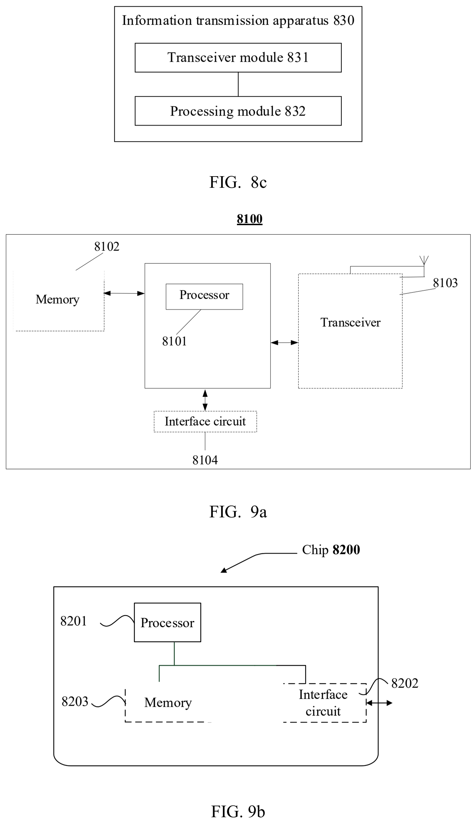

FIG. 8c is a schematic structural diagram of an information transmission apparatus provided by an embodiment of the present disclosure. As shown in FIG. 8c, the information transmission apparatus 830 includes: a transceiver module 831, configured to send first information to a first network function, where the first information is used to indicate the first network function to perform admission control of a network slice for the first terminal, and the first terminal is associated with a service group. Optionally, the transceiver module 831 is configured to execute the steps related to information transmission and reception performed by the third network function in any of the above information transmission methods. Optionally, the information transmission apparatus 830 further includes a processing module 832, which is configured to execute the steps related to determination and processing performed by the first network function in any of the above methods, and details are not repeated herein.

FIG. 9a is a schematic structural diagram of a communication device 8100 provided by an embodiment of the present disclosure. The communication device 8100 may be a network device (e.g., an access network device or a core network device, etc.), a terminal (e.g., a user equipment, etc.), a chip, a chip system, or a processor that supports the network device to implement any of the methods described above, or a chip, a chip system, or a processor that supports the terminal to implement any of the information transmission methods described above. The communication device 8100 may be configured to implement the information transmission methods described in the foregoing method embodiments, and reference may be made to the descriptions in the foregoing method embodiments for details.

As shown in FIG. 9a, the communication device 8100 includes one or more processors 8101. The processor 8101 may be a general-purpose processor or a special-purpose processor, such as a baseband processor or a central processing unit. The baseband processor may be configured to process communication protocols and communication data, and the central processing unit may be configured to control the communication apparatus (e.g., a base station, a baseband chip, a terminal device, a terminal device chip, a DU, or a CU, etc.), execute programs, and process program data. The processor 8101 is configured to invoke instructions to cause the communication device 8100 to execute any of the information transmission methods described above.

In some embodiments, the communication device 8100 further includes one or more memories 8102 for storing instructions. Optionally, all or part of the memory 8102 may also be located outside the communication device 8100.

In some embodiments, the communication device 8100 further includes one or more transceivers 8103. When the communication device 8100 includes one or more transceivers 8103, the communication steps such as sending and receiving in the aforementioned methods are executed by the transceivers 8103, and the other steps are executed by the processor 8101.

In some embodiments, a transceiver may include a receiver and a transmitter, where the receiver and the transmitter may be separate or integrated. Optionally, terms such as transceiver, transceiver unit, transceiver device, and transceiver circuit may be used interchangeably; terms such as transmitter, transmitting unit, transmitter device, and transmitting circuit may be used interchangeably; and terms such as receiver, receiving unit, receiver device, and receiving circuit may be used interchangeably.

Optionally, the communication device 8100 further includes one or more interface circuits 8104. The interface circuits 8104 are connected to the memory 8102, and may be configured to receive signals from the memory 8102 or other devices, and may also be configured to send signals to the memory 8102 or other apparatuses. For example, the interface circuit 8104 may read the instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 may not be limited by FIG. 9a. The communication device may be a standalone device or may be part of a larger device. For example, the communication device may be: (1) a standalone integrated circuit (IC), or chip, or chip system or subsystem; (2) a collection of one or more ICs, optionally, the above IC collection may also include storage components for storing data and computer programs; (3) an ASIC, such as a Modem; (4) a module that can be embedded in other devices; (5) a receiver, a terminal device, a smart terminal device, a cellular phone, a wireless device, a handset, a mobile unit, a vehicle-mounted device, a network device, a cloud device, an artificial intelligence device, etc.; (6) other equivalents.

FIG. 9b is a schematic structural diagram of a chip 8200 provided by an embodiment of the present disclosure. For the case where the communication device 8100 may be a chip or a chip system, reference may be made to the schematic structural diagram of the chip 8200 shown in FIG. 9b, but it is not limited thereto.

The chip 8200 includes one or more processors 8201, and the processors 8201 are configured to call instructions to cause the chip 8200 to execute any of the above information transmission methods.

In some embodiments, the chip 8200 further includes one or more interface circuits 8202. The interface circuits 8202 are connected to the memory 8203, and may be configured to receive signals from the memory 8203 or other apparatuses, and also may be configured to send signals to the memory 8203 or other apparatuses. For example, the interface circuit 8202 may read the instructions stored in the memory 8203 and send the instructions to the processor 8201. Optionally, terms such as interface circuit, interface, transceiver pin, and transceiver may be used interchangeably.

In some embodiments, the chip 8200 further includes one or more memories 8203 for storing instructions. Optionally, all or part of the memory 8203 may be located outside the chip 8200.

The present disclosure further provides a storage medium having instructions stored thereon. The instructions, when executed on the communication device 8100, cause the communication device 8100 to perform any of the above methods. Optionally, the storage medium is an electronic storage medium. Optionally, the storage medium is a computer-readable storage medium, but is not limited thereto, it may also be a storage medium readable by other apparatuses. Optionally, the storage medium may be a non-transitory storage medium, but is not limited thereto; it may also be a transitory storage medium.

The present disclosure further provides a program product, which, when executed by the communication device 8100, causes the communication device 8100 to perform any of the above information transmission methods. Optionally, the program product is a computer program product.

The present disclosure further provides a computer program, which, when executed on a computer, causes the computer to perform any one of the above methods.

Other embodiments of the present disclosure will be readily apparent to those skilled in the art upon consideration of the specification and practice of the present disclosure. This application is intended to cover any variations, uses, or adaptations of the present disclosure that follow the general principles of the present disclosure and include common knowledge or customary technical means in the art not disclosed herein. The specification and embodiments are to be regarded as illustrative only, with the true scope and spirit of the present disclosure being indicated by the following claims.

It should be understood that the present disclosure is not limited to the precise structure described and shown in the figures, and various modifications and changes may be made without departing from its scope. The scope of the present disclosure is limited only by the appended claims.

## Claims

1. An information transmission method, performed by a first network function, comprising:
receiving first information sent from a third network function, the first information being used for indicating the first network function to perform network slice admission control for a first terminal, wherein the first terminal is associated with a service group.

2. The method according to claim 1, wherein the first information further indicates at least one of:
de-registering the first terminal from the network slice;
an identifier of the service group associated with the first terminal;
an identifier of the first terminal;
an authorized access type of the network slice;
an identifier of the network slice;
an identifier of the third network function;
an admission control indication, indicating to register the first terminal to the network slice; or
an admission control indication, indicating to de-register the first terminal from the network slice.

3. The method according to claim 1, wherein the method further comprises:
performing the network slice admission control for the first terminal based on a comparison result between a first number of second terminals registered with the network slice in the first network function and a first threshold.

4. The method according to claim 3, wherein the method further comprises:
the first number being less than or equal to the first threshold, registering the first terminal to the network slice; or
the first number being greater than the first threshold, sending second information to a second network function, wherein the second information is used for indicating the second network function to perform an admission control associated with the network slice for the first terminal.

5. The method according to claim 4, wherein the method further comprises:
the service group associated with the first terminal being registered with the network slice in the first network function, registering the first terminal to the service group associated with the first terminal; or
the service group associated with the first terminal being not registered with the network slice in the first network function, and a second number of service groups already registered with the network slice in the first network function being less than or equal to a second threshold, registering the service group associated with the first terminal in the first network function.

6. The method according to claim 4, wherein the second information is used for indicating at least one of:
an identifier of the service group associated with the first terminal;
an identifier of the first terminal;
an authorized access type of the network slice;
an identifier of the network slice;
an identifier of the third network function;
an admission control indication, indicating to register the first terminal to the network slice; or
the admission control indication, indicating to de-register the first terminal from the network slice.

7. The method according to claim 4, wherein the method further comprises:
receiving third information sent from the second network function, wherein the third information is used for indicating an updated first threshold; and
performing the network slice admission control for the first terminal based on a comparison result between the first number and a third threshold, wherein the third threshold is an updated value of the first threshold.

8. The method according to claim 4, wherein the method further comprises:
receiving fourth information sent from the second network function, wherein the fourth information is used for indicating whether the second network function allows the first terminal to be registered to the network slice.

9. The method according to any one of claims 3 to 8, wherein the first threshold is at least one of:
a quota number of terminals for the network slice in the first network function,
a threshold number of terminals for the network slice in the first network function, or
a maximum number of terminals for the network slice in the first network function.

10. The method according to any one of claims 3 to 9, wherein,
the first number is associated with an access type of the first terminal; and
the first threshold is associated with the access type of the first terminal.

11. The method according to any one of claims 3 to 10, wherein the method further comprises at least one of:
removing a count of the first terminal from the first number; and
de-registering the first terminal from the service group associated with the first terminal in the network slice;
wherein the first information is further used for indicating to de-register the first terminal from the network slice.

12. The method according to claim 11, wherein the method further comprises:
deleting an identifier of a service group not registered with a terminal from the first network function.

13. The method according to any one of claims 1 to 11, wherein the method further comprises: sending fifth information to the third network function, wherein the fifth information is used for indicating at least one of:
a result of performing the network slice admission control;
a reason for not being registered to the network slice;
whether a maximum number of second terminals registered with the network slice is reached; or
whether a maximum number of service groups registered with the network slice is reached.

14. The method according to any one of claims 1 to 13, wherein the first network function is a local network slice admission control function (NSACF), the second network function is a primary NSACF, and the third network function is an access and mobility management function (AMF).

15. An information transmission method, performed by a second network function, comprising:
receiving second information sent from a first network function, the second information being used for indicating the second network function to perform network slice admission control for a first terminal in a service group, wherein the first terminal is associated with the service group, wherein the second information is sent from the first network function based on first information, the first information being used for indicating the first network function to perform the network slice admission control for the first terminal, and the first information being sent from a third network function to the first network function.

16. The method according to claim 15, wherein the second information is sent in response to the first network function performing the network slice admission control for the first terminal and determining that a first number of second terminals registered with the network slice in the first network function is greater than a first threshold.

17. The method according to claim 16, wherein the method further comprises:
performing the network slice admission control for the first terminal based on a comparison result between a third number of third terminals registered with the network slice in the first network function and a fourth threshold; or
sending third information to the first network function, wherein the third information is used for indicating an updated first threshold, wherein the updated first threshold is used for the first network function to compare with the first threshold to determine whether to allow the first terminal to be registered to the network slice.

18. The method according to claim 17, wherein the method further comprises:
the third number being less than or equal to the fourth threshold, registering the first terminal to the network slice; or
the third number being greater than the fourth threshold, not allowing the first terminal to be registered to the network slice.

19. The method according to claim 18, wherein the method further comprises:
the service group associated with the first terminal being registered with the network slice in the second network function, registering the first terminal to the service group associated with the first terminal; or
the service group associated with the first terminal being not registered with the network slice in the second network function, and a fourth number of service groups registered with the network slice in the second network function being less than or equal to a fifth threshold, registering the service group associated with the first terminal in the second network function.

20. The method according to claim 18, wherein the method further comprises:
sending fourth information to the first network function, wherein the fourth information is used for indicating whether the second network function allows the first terminal to be registered to the network slice.

21. The method according to any one of claims 17 to 20, wherein the fourth threshold is at least one of: a quota number of terminals for the network slice in the second network function, a threshold number of terminals for the network slice in the second network function, or a maximum number of terminals for the network slice in the second network function.

22. The method according to any one of claims 16 to 21, wherein the first threshold is at least one of: a quota number of terminals for the network slice in the first network function, a threshold number of terminals for the network slice in the first network function, or a maximum number of terminals for the network slice in the first network function.

23. The method according to any one of claims 16 to 21, wherein the second information is used for indicating at least one of:
an identifier of the service group associated with the first terminal;
an identifier of the first terminal;
an authorized access type of the network slice;
an identifier of the network slice;
an identifier of the third network function;
an admission control indication, indicating to register the first terminal to the network slice; or
the admission control indication, indicating to de-register the first terminal from the network slice.

24. An information transmission method, performed by a third network function, comprising:
sending first information to a first network function, the first information being used for indicating the first network function to perform network slice admission control for a first terminal, wherein the first terminal is associated with a service group.

25. The method according to claim 24, wherein the first information further indicates at least one of:
de-registering the first terminal from the network slice;
an identifier of the service group associated with the first terminal;
an identifier of the first terminal;
an authorized access type of the network slice;
an identifier of the network slice;
an identifier of the third network function;
an admission control indication, indicating to register the first terminal to the network slice; or
the admission control indication, indicating to de-register the first terminal from the network slice.

26. The method according to claim 24 or 25, wherein the first network function performing the network slice admission control is performed based on a comparison result between a first number of second terminals registered with the network slice and a first threshold.

27. The method according to claim 26, wherein,
the first number being less than or equal to the first threshold, the first network function registers the first terminal to the network slice; or
the first number being greater than the first threshold, the first network function sends second information to a second network function, wherein the second information is used for indicating the second network function to perform an admission control associated with the network slice for the first terminal.

28. The method according to claim 27, wherein the second information is used for indicating at least one of:
an identifier of the service group associated with the first terminal;
an identifier of the first terminal;
an authorized access type of the network slice;
an identifier of the network slice;
an identifier of the third network function;
an admission control indication, indicating to register the first terminal to the network slice; or
the admission control indication, indicating to de-register the first terminal from the network slice.

29. The method according to claim 27, wherein the first network function performing the network slice admission control is determined by the first network function based on a comparison result between a first number of second terminals registered in the first network function and an updated first threshold, wherein the updated first threshold is indicated by third information sent from the second network function to the first network function based on the second information.

30. The method according to any one of claims 26 to 29, wherein the first threshold is at least one of: a quota number of terminals for the network slice in the first network function, a threshold number of terminals for the network slice in the first network function, or a maximum number of terminals for the network slice in the first network function.

31. The method according to any one of claims 24 to 30, wherein the method further comprises:
receiving fifth information sent from the first network function, wherein the fifth information is used for indicating at least one of:
a result of performing the network slice admission control for the first terminal;
a reason for not being registered to the network slice;
whether a maximum number of second terminals registered with the network slice is reached; or
whether a maximum number of service groups registered with the network slice is reached.

32. The method according to claim 31, wherein the result of performing the network slice admission control for the first terminal is indicated by a second network function to the first network function through fourth information.

33. The method according to any one of claims 24 to 32, wherein the method further comprises:
determining the service group to which the first terminal belongs based on at least one of:
a local configuration of the third network function;
an operation administration and maintenance (OAM) configuration of the third network function;
unified data management (UDM) subscription information of the first terminal;
a service capability of the first terminal;
service group information corresponding to a permanent equipment identifier (PEI) of the first terminal; or
service group information in a UE context.

34. An information transmission apparatus, comprising:
a transceiver module, configured to receive first information sent from a third network function, the first information being used for indicating a first network function to perform network slice admission control for a first terminal, wherein the first terminal is associated with a service group.

35. An information transmission apparatus, comprising:
a transceiver module, configured to receive second information sent from a first network function, the second information being used for indicating a second network function to perform network slice admission control for a first terminal in a service group, wherein the first terminal is associated with the service group, wherein the second information is sent from the first network function based on first information, the first information being used for indicating the first network function to perform the network slice admission control for the first terminal, and the first information being sent from a third network function to the first network function.

36. An information transmission apparatus, comprising:
a transceiver module, configured to send first information to a first network function, the first information being used for indicating the first network function to perform network slice admission control for a first terminal, wherein the first terminal is associated with a service group.

37. A communication system, comprising:
a first network function, configured to implement the information transmission method according to any one of claims 1 to 14,
a second network function, configured to implement the information transmission method according to any one of claims 15 to 23, and
a third network function, configured to implement the information transmission method according to any one of claims 24 to 33.

38. A communication device, comprising:
one or more processors;
wherein the processor is configured to call instructions to enable the communication device to execute the information transmission method according to any one of claims 1 to 14, claims 15 to 23, or claims 24 to 33.

39. A storage medium, wherein the storage medium stores instructions, and the instructions, when being run on a communication device, enable the communication device to execute the information transmission method according to any one of claims 1 to 14, claims 15 to 23, or claims 24 to 33.
